(19) **Europäisches Patentamt / European Patent Office / Office européen des brevets**

(11) **EP 4 678 686 A1**

(12) **EUROPEAN PATENT APPLICATION**
published in accordance with Art. 153(4) EPC

(43) Date of publication:
**14.01.2026 Bulletin 2026/03**

(21) Application number: **24766934.4**

(22) Date of filing: **27.02.2024**

(51) International Patent Classification (IPC):
**C08J 5/18** (2006.01)   **A01G 9/14** (2006.01)
**A01G 13/00** (2006.01)   **A01G 13/02** (2006.01)
**B32B 27/18** (2006.01)   **B32B 27/36** (2006.01)
**B65D 65/40** (2006.01)   **C08L 101/16** (2006.01)

(52) Cooperative Patent Classification (CPC):
**A01G 9/14; A01G 13/00; A01G 13/20; B32B 27/18; B32B 27/36; B65D 65/40; B65D 65/46; C08G 63/06; C08J 5/18; C08L 101/16**

(86) International application number:
**PCT/JP2024/006950**

(87) International publication number:
**WO 2024/185563 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023   JP 2023036330**
**09.03.2023   JP 2023036331**
**09.03.2023   JP 2023036332**
**09.03.2023   JP 2023036333**
**09.03.2023   JP 2023036334**

(71) Applicant: **Toray Industries, Inc.**
**Tokyo 103-8666 (JP)**

(72) Inventors:
• **IMANISHI, Yasuyuki**
  **Otsu-shi, Shiga 520-8558 (JP)**
• **SAKAMOTO, Mitsutaka**
  **Otsu-shi, Shiga 520-8558 (JP)**
• **TATSUMI, Noriyuki**
  **Otsu-shi, Shiga 520-8558 (JP)**
• **TAKAHASHI, Wataru**
  **Otsu-shi, Shiga 520-8558 (JP)**

(74) Representative: **Kador & Partner Part mbB**
**Corneliusstraße 15**
**80469 München (DE)**

(54) **POLYHYDROXYALKANOIC ACID FILM, PACKAGING, INDUSTRIAL MATERIAL FOR AGRICULTURE, FORESTRY, AND FISHERIES, BIODEGRADATION METHOD, AND RAW MATERIAL FOR AGRICULTURE, FORESTRY, AND FISHERIES**

(57)   An object of the present invention is to provide a polyhydroxyalkanoic acid film which has biodegradability and can reduce the number of pinholes that occur after repeated bending. The object is achieved by a polyhydroxyalkanoic acid having a puncture strength (converted into a value at a thickness of 20 $\mu$m) of 80 gf or more.

Fig. 1

## Description

Technical Field

The present invention relates to a polyhydroxyalkanoic acid film, a packaging body, agricultural, forestry and fishery materials, a biodegradation method, and agricultural, forestry and fishery contents.

Background Art

From the viewpoint of curbing global warming, various efforts are being made in countries around the world to achieve carbon neutrality. In particular, there is a demand to reduce the amount of plastic products used and disposed of, as they emit large amounts of $CO_2$ during their production and disposal. Since packaging plastics are used in particularly large quantities among various plastic products and many of them are disposable, there is a need to reduce the use and disposal of packaging plastics, including films, and to recycle or replace them with plant-derived materials.

In recent years, the environmental pollution problem of plastic flowing into the ocean has also been attracting attention. For example, there have been pointed out cases of fish, seabirds, and marine mammals accidentally ingesting plastic products that have drifted into the ocean and dying, and of microplastics that have been broken down by waves and ultraviolet rays bioaccumulating in the marine food chain, posing serious health risks to humans who eat fish and other marine organisms. These problems are caused by plastic for packaging that is not disposed of properly, as well as plastic materials used in agricultural applications that flow into the ocean via rivers, and plastic materials dumped after use in fishery and fish culture industries and end up drifting in the ocean. For this reason, there is also a need to impart biodegradability functions to plastics in case plastics for packaging and agricultural, forestry and fishery materials are not disposed of properly.

The use of biodegradable plastics is expected to combat marine pollution caused by this type of plastic However, a report compiled by the United Nations Environment Programme in 2015 pointed out that plastics that can be biodegraded by composting, such as polylactic acid, cannot be expected to decompose in the ocean in a short period of time due to the low temperature of the actual ocean, and thus cannot be used to combat marine pollution. Under such circumstances, among biodegradable plastics, films made of polyhydroxyalkanoate resins have attracted particular attention and are being considered for use in packaging materials because aliphatic polyester resins have high biodegradability.

There has been proposed a sheet form for freshness preservation packaging of fruits and vegetables, which is produced as a biodegradable film from a resin such as polylactic acid, polybutylene succinate, polybutylene adipate terephthalate, 3-hydroxybutyrate-co-3-hydroxyhexanoate copolymer, or polyhydroxyalkanoic acid by an inflation method (Patent Literature 1). In addition, a production method has been proposed in which a polyhydroxyalkanoate resin sheet as a biodegradable film is subjected to partial melt stretching as a primary stretching in the temperature range of the temperature equal to or more than the melting point of the sheet minus 25°C and the melting point of the sheet or less, followed by a secondary stretching (Patent Literature 2). Furthermore, a production method has been proposed in which a sheet obtained by blending poly(3-hydroxybutyrate) resin as a polyhydroxyalkanoic acid film is continuously biaxially stretched in the flow direction (MD direction) and in the direction orthogonal to the flow direction (TD direction) in the film production step without roll pressing, at a stretching ratio of 1.1 times or more (Patent Literature 3).

Citation List

Patent Literature

Patent Literature 1: JP 2022-106249 A
Patent Literature 2: JP 2003-311825 A
Patent Literature 3: JP 2022-62759 A

Summary of Invention

Technical Problem

However, in Patent Literature 1, the polyhydroxyalkanoate resin is produced by an inflation method, and therefore the molecular chain extension of the polyhydroxyalkanoate resin is insufficient, and there is room for further improvement in strength. In particular, the film of Patent Literature 1 has many pinholes after repeated bending, making it difficult to use for applications that require high content protection. In addition, all of the films described in Patent Literature 2 have their strength improved by secondary stretching, which is multistage stretching in a uniaxial direction and the strength improvement is limited to one direction. Therefore, there is room for improvement in strength in a direction perpendicular to the stretching direction. Furthermore, many pinholes occur after repeated bending in multiple directions. The film described in Patent Literature 3 is a production method of biaxially stretching a polyhydroxyalkanoic acid film, which has small area stretching ratio during film formation, resulting in insufficient molecular chain extension of the polyhydroxyalkanoate resin, and there is room for further improvement in strength.

Therefore, an object of the present invention is to provide a polyhydroxyalkanoic acid film which has biodegradability and can reduce the number of pinholes that occur after repeated bending.

Solution to Problem

The present inventors have studied intensively to solve the above problems and have achieved the present invention described below. That is, a preferred aspect of the invention is as follows.

1. A polyhydroxyalkanoic acid film having a puncture strength (converted into a value at a thickness of 20 $\mu$m) of 80 gf or more, as determined with the following measuring device and under the following measurement conditions:

> Measuring device: HANDY-TYPE COMPRESSION TESTER KES-G5
> manufactured by KATO TECH CO., LTD.
> (Measurement Conditions)
> SENS: 10
> SPEED: 0.20 cm/sec
> STROKE: 20 mm/10 V
> Needle diameter: 1.0 mm$\varphi$
> Hole diameter: 10.0 mm$\varphi$

2. The polyhydroxyalkanoic acid film according to 1, wherein S1 and S2 satisfy the following formula (1) and formula (2):

$$30 \text{ MPa} \leq \text{S1} \leq 280 \text{ MPa} \cdots \text{ formula (1)}$$

$$30 \text{ MPa} \leq \text{S2} \leq 280 \text{ MPa} \cdots \text{ formula (2)}$$

where S1 (MPa) is a tensile strength at break in a main orientation axis direction, and S2 (MPa) is a tensile strength at break in a direction orthogonal to the main orientation axis direction.

3. The polyhydroxyalkanoic acid film according to 1 or 2, wherein in a thermal shrinkage curve obtained with a thermomechanical analyzer (TMA), both of a shrinkage onset temperature T1 (°C) in the main orientation axis direction of the film and a shrinkage onset temperature T2 (°C) in the direction orthogonal to the main orientation axis direction are 40°C or more and 150°C or less.

4. The polyhydroxyalkanoic acid film according to any one of 1 to 3, wherein N1 and N2 satisfy the following formula (3):

$$2.0 \times 10^{-4} \leq |\text{N1 - N2}| \leq 1.3 \times 10^{-2} \cdots \text{ formula (3)}$$

where N1 is a refractive index at a wavelength of 1550 nm in the main orientation axis direction and N2 is a refractive index at a wavelength of 1550 nm in the direction orthogonal to the main orientation axis direction.

5. The polyhydroxyalkanoic acid film according to any one of 1 to 4, wherein both of a thermal shrinkage ratio H1 (%) in the main orientation axis direction of the film and a thermal shrinkage ratio H2 (%) in a direction orthogonal to the main orientation axis direction are 0% or more and 20% or less, as determined by heat treatment at 120°C for 15 minutes.

6. The polyhydroxyalkanoic acid film according to any one of 1 to 5, wherein both of L1 and L2 are 10% or more and 350% or less, where **L1** (%) is an elongation at break in the main orientation axis direction and L2 (%) is an elongation at break in the direction orthogonal to the main orientation axis direction.

7. The polyhydroxyalkanoic acid film according to any one of 1 to 6, wherein a puncture displacement is 2.0 mm or more and 4.5 mm or less, as determined with the following measuring device under the following measurement conditions:

> Measuring device: HANDY-TYPE COMPRESSION TESTER KES-G5

manufactured by KATO TECH CO.,LTD.
(Measurement condition)
SENS: 10
SPEED: 0.20 cm/sec
STROKE: 20 mm/10V
Needle diameter :1.0 mmφ
Hole diameter : 10.0 mmφ

8. The polyhydroxyalkanoic acid film according to any one of 1 to 7, satisfying the following formula (4):

$$0.002 \le (N12 - Nz) \le 0.015 \cdots \text{formula (4)}$$

where N12 is an average value of N1 and N2, N1 is a refractive index at a wavelength of 1550 nm in the main orientation axis direction, N2 is a refractive index at a wavelength of 1550 nm in the direction orthogonal to the main orientation axis direction, and Nz is a refractive index at a wavelength of 1550 nm in the thickness direction.

9. The polyhydroxyalkanoic acid film according to any one of 1 to 8, wherein in wide-angle X-ray diffraction in the thickness direction using a CuKα radiation, the crystallite size obtained from a half width of PB is 5 nm or more and 60 nm or less, where PB is the peak with the highest intensity among the peaks with a degree of orientation of 0.50 or more at a diffraction angle 2θ in the range of 19° or more and 21° or less.

10. The polyhydroxyalkanoic acid film according to any one of 1 to 9, further including a functional layer on at least one side.

11. The polyhydroxyalkanoic acid film according to any one of 1 to 10, which is used for packaging applications.

12. A packaging body, comprising the polyhydroxyalkanoic acid film according to any one of 1 to 11.

13. The polyhydroxyalkanoic acid film according to any one of 1 to 11, which is used for agricultural, forestry and fishery applications.

14. Agricultural, forestry and fishery materials, comprising the polyhydroxyalkanoic acid film according to any one of 1 to 11.

15. A biodegradation method, comprising decomposing the polyhydroxyalkanoic acid film according to any one of 1 to 11 with compost equipment.

16. A biodegradation method, comprising decomposing the packaging body according to 12 with compost equipment.

17. A biodegradation method, comprising decomposing the agricultural, forestry and fishery materials according to 14 with compost equipment.

18. The polyhydroxyalkanoic acid film according to any one of 1 to 11, which is a film used to cover agricultural, forestry and fishery contents, and the agricultural, forestry and fishery contents comprise at least one selected from fertilizers, feeds, seeds and seedlings, and chemicals.

19. Agricultural, forestry and fishery contents, which is covered with the polyhydroxyalkanoic acid film according to any one of 1 to 11.

Advantageous Effects of Invention

The polyhydroxyalkanoic acid film obtained by the present invention has biodegradability and can reduce the number of pinholes that occur after repeated bending. Thus, it can sufficiently protect the content, and therefore suitably used for packaging application and agriculture, forestry and fisheries applications.

Brief Description of Drawings

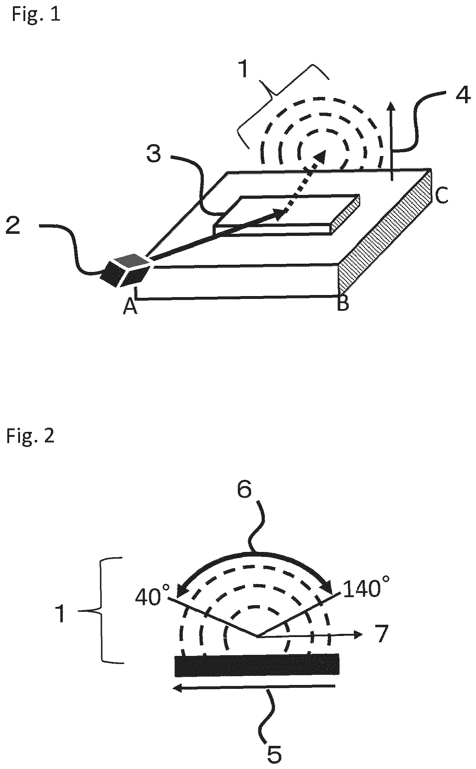

FIG. 1 is an oblique overhead view showing an overview of the positional relationship between the X-ray source, sample, and diffraction image in wide-angle X-ray diffraction measurement.
FIG. 2 is a view from direction A-B in FIG. 1.

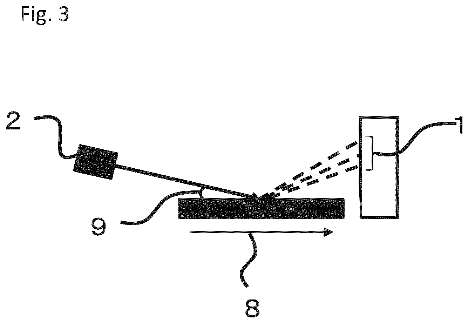

FIG. 3 is a view from direction B-C in FIG. 1.

Description of Embodiments

The polyhydroxyalkanoic acid film of the present invention will now be described in detail. Hereinafter, when the upper and lower limits of a preferred range are separately stated, the combination of the upper and lower limits can be arbitrary. In the present specification, the polyhydroxyalkanoic acid film may be hereinafter simply referred to as a film. In the polyhydroxyalkanoic acid film of the present invention, "the thickness direction" refers to the direction perpendicular to the film surface. The "longitudinal direction" refers to the direction (hereinafter also referred to as "MD") corresponding to the flow direction in the film production step, and the "width direction" refers to the direction (hereinafter also referred to as "TD") orthogonal to the flow direction in the film production step in the film surface. When the film sample is in the form of a reel, roll, etc., the film winding direction can be said to be the longitudinal direction. When the stretching direction (the longitudinal direction and the width direction) is unknown, the tensile strength at break, which is required for breaking in the tensile test described below, is measured, and the direction where the measurement value is larger is designated as the main orientation axis direction. Specifically, the main orientation axis direction is identified by the following method.

Specifically, the film is prepared and cut into a rectangle of 150 mm long × 10 mm wide with an arbitrary direction turning up to make a sample <1>, and the direction of the long side of the sample <1> is defined as 0°. Next, a sample <2> of the same size is taken such that the long side direction corresponds to the direction rotated 15° to the right from the 0° direction. Hereinafter, in the same manner, the long side direction of the rectangular sample is rotated by 15°, and samples <3> to <12> are obtained similarly. Next, each rectangular sample is set in a tensile testing machine (e.g., "Tensilon Universal Testing Machine" RTG-1210 manufactured by A&D Company, Limited ) with an initial chuck distance of 30 mm such that the longitudinal direction corresponds to the tensile direction, and the tensile test is performed at a tensile speed of 300 mm/min in a temperature and humidity atmosphere of $25 \pm 5$°C and $65 \pm 10$% RH. The maximum load that can be applied until the sample breaks is read and divided by the cross-sectional area of the sample before the test (film thickness × width) to calculate the value as the tensile strength at break, and the long side direction of the sample where this value is maximum is regarded as the main orientation axis of the polyhydroxyalkanoic acid film. Furthermore, the direction orthogonal to this direction in the film plane is taken as the direction orthogonal to the main orientation axis direction of the polyhydroxyalkanoic acid film.

The polyhydroxyalkanoic acid film of the present invention preferably has the puncture strength (converted into a value at a thickness of 20 μm) of 80 gf or more. By setting the puncture strength (converted into a value at a thickness of 20 μm) to 80 gf or more, it is possible to impart strength suitable for processing. Thus, the polyhydroxyalkanoic acid film has sufficiently high puncture resistance and excellent pinhole resistance, and therefore improves the preservation and barrier properties of the contents when used for packaging or agriculture, forestry, and fisheries applications, for example. Preferably, by setting the puncture strength (converted into a value at a thickness of 20 μm) to 1500 gf or less, it is possible to impart flexibility suitable for processing. Thus, the polyhydroxyalkanoic acid film has both excellent perforation processability and the pinhole resistance, making it easy to apply punching process for imparting hand tearability when used for packaging applications or agricultural, forestry, and fisheries applications, for example. From the viewpoints described above, the puncture strength (converted into a value at a thickness of 20 μm) is more preferably 150 gf or more, still more preferably 200 gf or more, and most preferably 250 gf or more. From the viewpoints described above, the puncture strength (converted into a value at a thickness of 20 μm) is more preferably 1500 gf or less, even more preferably 1000 gf or less, still more preferably 900 gf or less, particularly preferably 850 gf or less, and most preferably 800 gf or less. The puncture strength (converted into a value at a thickness of 20 μm) is measured by the method described in Examples.

The method of controlling the puncture strength within the above range is not particularly limited, but one example is a method in which a polyhydroxyalkanoate resin containing a particular crystal nucleating agent is used as described below, and the film conveying speed at the inlet of the longitudinal stretching is adjusted relative to the speed at the outlet of the casting drum during film formation, and the biaxial stretching is performed. More specifically, by using a polyhydroxyalkanoate resin containing one or more selected from fatty acid amides, urea derivatives, sorbitol-based compounds, boron nitride, fatty acid salts, and aromatic fatty acid salts as the crystal nucleating agent, it is possible to form a large amount of microcrystals with small crystallite size in the film. Then, by controlling the film conveying speed at the outlet of the casting drum and the inlet of the longitudinal stretching, it is possible to improve the orderliness of the molecular chain arrangement after the longitudinal stretching and impart appropriate flexibility and strength. Further, the higher the stretching ratio, the greater the binding force between adjacent molecular chains due to entanglement. Furthermore, the heat treatment after stretching causes thermal crystallization, resulting in a synergistic effect that improves puncture strength and makes it possible to obtain a film with excellent pinhole resistance. More specifically, it can be achieved by setting the film conveying speed at the inlet of the longitudinal stretching to 101% or more and 125% or less relative to the speed at the outlet of the casting drum during film formation, biaxially stretching by an area ratio of four times or more according to the sequential biaxial method, and controlling the heat treatment temperature after the biaxial stretching to 70°C or more and 150°C or less.

In the polyhydroxyalkanoic acid film of the present invention, S1 and S2 preferably satisfy formula (1) and formula (2):

$$30\text{MPa} \leq S1 \leq 280\text{MPa} \cdots \text{formula (1)}$$

$$30\text{MPa} \leq S2 \leq 280\text{MPa} \cdots \text{ formula (2)}$$

where S1 (MPa) is a tensile strength at break in a main orientation axis direction, and S2 (MPa) is a tensile strength at break in a direction orthogonal to the main orientation axis direction. By setting both S1 and S2 to 30 MPa or more, the mechanical strength of the polyhydroxyalkanoic acid film becomes sufficiently high, which suppresses sagging during vapor deposition processing and conveyance in a case where various functional layers are applied for use in packaging or agricultural, forestry and fisheries applications, and prevents the film from breaking due to tension. Moreover, it is preferable that both S1 and S2 be 280 MPa or less. In order to achieve the mechanical strength exceeding 280 MPa, it is necessary to increase the stretching ratio or decrease the stretching temperature during film formation to increase orientation. Therefore, from the viewpoint of suppressing breakage and improving the productivity, both S1 and S2 are more preferably 240 MPa or less, and even more preferably 200 MPa or less. On the other hand, from the viewpoint of suppressing deformation due to tension during roll-to-roll vapor deposition processing or conveyance, both S1 and S2 are more preferably 35 MPa or more, and even more preferably 40 MPa or more. The tensile strength at break is measured by the method described in Examples. The method of controlling S1 and S2 within the above ranges is not particularly limited, but a preferred example is a method similar to the method of controlling the puncture strength described above.

In the polyhydroxyalkanoic acid film of the present invention, it is preferable that in a thermal shrinkage curve obtained with a thermomechanical analyzer (TMA), both of a shrinkage onset temperature T1 (°C) in the main orientation axis direction of the film and a shrinkage onset temperature T2 (°C) in the direction orthogonal to the main orientation axis direction are 40°C or more and 150°C or less. It is generally known that polyhydroxyalkanoic acid film has a glass transition temperature near 0°C, and in particular, the biaxially stretched polyhydroxyalkanoic acid film may begin to shrink at temperatures near 0°C, which is its glass transition temperature. Therefore, setting both of T1 and T2 of the polyhydroxyalkanoic acid film of the present invention to 40°C or more and 150°C or less makes the dimensional stability of the polyhydroxyalkanoic acid film sufficiently high. In particular, when vapor deposition processing is performed, the polyhydroxyalkanoic acid film can deform to moderately shrink rather than excessively shrink without expanding in response to the heat generated during vapor deposition, thereby suppressing the occurrence of defects such as pinholes and cracks in the layer D described below, and improving the barrier property of the laminate on which the layer D described below is laminated. In order to make both of T1 and T2 exceed 150°C, it is necessary to perform a heat treatment exceeding 150°C during film formation. From the viewpoint of poor productivity, such as film rupture during film formation, it is preferable that T1 and T2 be both 150°C or less. From the viewpoints described above, T1 and T2 are more preferably 44°C or more, still more preferably 49°C or more, and particularly preferably 55°C or more. In addition, from the viewpoints described above, T1 and T2 are more preferably 144°C or less, even more preferably 139°C or less, still more preferably 130°C or less, and particularly preferably 119°C or less. Each shrinkage onset temperatures is measured by the method described in Examples. The method of controlling T1 and T2 within the above range is not particularly limited, but one example is a method in which a polyhydroxyalkanoate resin containing a particular crystal nucleating agent is used as described below, and the film conveying speed at the inlet of the longitudinal stretching is adjusted relative to the speed at the outlet of the casting drum during film formation, and the biaxial stretching is performed, and then heat treated is performed. Particularly, by using a polyhydroxyalkanoate resin containing a nucleating agent having a crystallization effect, it is possible to form a large amount of microcrystals with small crystallite size in the film. Then, by controlling the film conveying speed at the outlet of the casting drum and the inlet of the longitudinal stretching, it is possible to improve the orderliness of the molecular chain arrangement after the longitudinal stretching. Further, by stretching at higher ratio, the binding force between adjacent molecular chains can be improved by entanglement. Furthermore, thermal crystallization by heat treatment after stretching has a synergistic effect, making it possible to raise the temperature of the shrinkage onset temperature. More specifically, it can be achieved by setting the film conveying speed at the inlet of the longitudinal stretching to 101% or more and 125% or less relative to the speed at the outlet of the casting drum during film formation, biaxially stretching at an area ratio of four times or more according to the sequential biaxial method, and controlling the heat treatment temperature after the biaxial stretching to 70°C or more and 150°C or less.

In the polyhydroxyalkanoic acid film of the present invention, N1 and N2 preferably satisfy formula (3):

$$2.0 \times 10^{-4} \leq |N1\text{-}N2| \leq 1.3 \times 10^{-2} \cdots \text{ formula (3)}$$

where N1 is a refractive index at a wavelength of 1550 nm in the main orientation axis direction and N2 is a refractive index at a wavelength of 1550 nm in the direction orthogonal to the main orientation axis direction. The fact that |N1-N2| is $2.0 \times 10^{-4}$ or more indicates that the molecular chains form the crystal structure in an extended state, rather than a helical structure, within the polyhydroxyalkanoic acid film surface, and it is considered the anisotropy of molecular chain orientation is imparted, and since the ester groups of the molecular chains are easily exposed, excellent biodegradability can be developed. In addition, the molecular chain orientation is higher in the planar direction of the film, which increases the interaction between the molecular chains and makes it possible to increase the mechanical strength. As described above, imparting the anisotropy of molecular chain orientation in the surface suppresses sagging during vapor deposition processing and conveyance, which may occur when used in packaging or agricultural, forestry and fisheries applications, and prevents the film from breaking due to tension, for example. When the anisotropy of the molecular chain orientation between the main orientation axis direction and the direction orthogonal to the main orientation axis direction of the film is too high, the film may be destroyed due to stress during film conveyance in the post-processing step. In addition, when used as packaging material or agricultural, forestry and fishery materials, it may become the starting point for partial destruction such as cracks caused by punctures with protrusions of the contents, etc. Therefore, |N1 - N2| is preferably 1.3 $\times$ $10^{-2}$ or less. From the viewpoint described above, |N1 - N2| is more preferably $4.0 \times 10^{-4}$ or more, even more preferably $6.0 \times 10^{-4}$ or more, and particularly preferably $1.0 \times 10^{-3}$ or more. Moreover, from the viewpoint described above, |N1 - N2| is more preferably $1.1 \times 10^{-2}$ or less, even more preferably $1.0 \times 10^{-2}$ or less, and particularly preferably $9.0 \times 10^{-3}$ or less. The method of controlling |N1 - N2| within the above range is not particularly limited, but one example is a method in which the film conveying speed at the inlet of the longitudinal stretching is adjusted relative to the speed at the outlet of the casting drum during film formation, and the biaxial stretching is performed. More specifically, it can be achieved by setting the film conveying speed at the inlet of the longitudinal stretching to 101% or more and 125% or less relative to the speed at the outlet of the casting drum during film formation, and biaxially stretching at an area ratio of four times or more according to the sequential biaxial method. The refractive index is measured by the method described in Examples.

In the polyhydroxyalkanoic acid film of the present invention, it is preferable that both of a thermal shrinkage ratio H1 (%) in the main orientation axis direction of the film and a thermal shrinkage ratio H2 (%) in the direction orthogonal to the main orientation axis direction of the film obtained by heat treatment at 120°C for 15 minutes be 0% or more and 20% or less from the viewpoint of providing sufficiently high dimensional stability of the film both in the main orientation axis direction and in the direction orthogonal to the main orientation axis direction, and of suppressing wrinkles and loosening during high speed processing. From the above viewpoint, both of H1 and H2 are more preferably 15% or less, even more preferably 9% or less, and particularly preferably 6% or less. Furthermore, the lower limits of H1 and H2 are not particularly limited, but from the viewpoint of preventing wrinkles and loosening due to thermal expansion during high speed processing, both of H1 and H2 are more preferably 0.1% or more, and even more preferably 0.3% or more. In the present specification, the thermal shrinkage ratio can be obtained as a change ratio (%) in film length before and after heat treatment of a film in a specified direction at 120°C for 15 minutes, and is specifically measured by the methods described in the Examples. The method of controlling H1 and H2 within the above range is not particularly limited, and examples include a method in which a polyhydroxyalkanoate resin containing a particular crystal nucleating agent is used; the film conveying speeds at the outlet of the casting drum and at the inlet of the longitudinal stretching are controlled during film formation; a method in which the stretching ratio is adjusted; and a method in which and a method in which conditions for heat treatment and relaxation treatment after stretching are adjusted. Particularly, by using a polyhydroxyalkanoate resin containing a nucleating agent having a crystallization effect, it is possible to form a large amount of microcrystals with small crystallite size in the film. Then, by controlling the film conveying speed at the outlet of the casting drum and the inlet of the longitudinal stretching, it is possible to improve the orderliness of the molecular chain arrangement after the longitudinal stretching. In addition, by performing heat treatment after stretching within the preferred time range described later, thermal crystallization can be caused, and by applying the relaxation treatment within the preferred speed range described later, excessively tensioned molecular chains can be relaxed, which makes it possible to reduce the thermal shrinkage ratio.

In the polyhydroxyalkanoic acid film of the present invention, both of L1 and L2 preferably 10% or more and 350% or less, where L1 (%a) is an elongation at break in a main orientation axis direction, and L2 (%) is an elongation at break in a direction orthogonal to the main orientation axis direction. By setting both L1 and L2 to 10% or more, it is possible to impart moderate flexibility, prevent polyhydroxyalkanoic acid film from becoming extremely difficult to deform, and make the film difficult to break due to tension during the vapor deposition processing and conveyance. Furthermore, by setting both L1 and L2 to 350% or less, for example in a configuration described below, in which a layer D is laminated, it is possible to reduce the loss of barrier properties due to cracks occurring in the layer D during conveyance or bag-making processing. From the viewpoints described above, both L1 and L2 are more preferably 50% or more, still more preferably 90% or more. In addition, from the viewpoints described above, both L1 and L2 are more preferably 330% or less, still more preferably 310% or less. The elongation at break is measured by the method described in Examples. The method of controlling L1 and L2 within the above range is not particularly limited, but one example is a method in which the film conveying speed at the inlet of the longitudinal stretching is adjusted relative to the speed at the outlet of the casting drum during film formation, and the biaxial stretching is performed. More specifically, it can be achieved by setting the film conveying speed at the inlet of the longitudinal stretching to 101% or more and 125% or less relative to the speed at the outlet of the casting drum during film formation, and biaxially stretching at an area ratio of four times or more according to the sequential biaxial method.

The polyhydroxyalkanoic acid film of the present invention preferably has the puncture displacement of 2.0 mm or more and 4.5 mm or less. By setting the puncture displacement to 2.0 mm or more, the flexibility of the polyhydroxyalkanoic acid film becomes sufficiently high, which suppresses sagging during the vapor deposition processing and conveyance, and prevents the film from breaking due to tension. In addition, by setting the puncture displacement to 4.5 mm or less, the polyhydroxyalkanoic acid film is prevented from becoming extremely difficult to deform, and for example, in a configuration described below, in which the layer D is laminated, it is possible to reduce impairment in the water vapor barrier property and the oxygen barrier property due to cracks occurring in the layer D during conveyance or bag-making processing. From the viewpoint described above, the puncture displacement is more preferably 2.2 mm or more, even more preferably 2.5 mm or more, and particularly preferably 3.0 mm or more, and the puncture displacement is more preferably 4.0 mm or less, and even more preferably 3.5 mm or less. The puncture displacement is measured by the method described in Examples. The method of controlling the puncture displacement within the above ranges is not particularly limited, but a preferred example is a method similar to the method of controlling L1 and L2 described above.

It is preferable that the polyhydroxyalkanoic acid film of the present invention satisfies formula (4) where Nz is a refractive index at a wavelength of 1550 nm in the thickness direction, and N12 is the average value of N1 and N2.

$$0.002 \leq (N12\text{-}Nz) \leq 0.015 \cdots \text{ formula (4)}$$

(N12 - Nz) means that the degree of orientation is sufficiently high in the in-plane direction relative to the thickness direction of the polyhydroxyalkanoic acid film, and (N12 - Nz) of 0.002 or more is considered to indicate that a crystal structure is formed in which the molecular chains are not in helical structure but in a fully extended state in the film surface. Accordingly, the ester groups in the molecular chain are easily exposed, and therefore excellent biodegradability can be developed. In addition, the molecular chain orientation is higher in the in-plane direction of the film, which increases the interaction between the molecular chains and makes it possible to increase the puncture strength. As described above, increasing the degree of the molecular chain orientation in the plane suppresses sagging during vapor deposition processing and conveyance in a case where various functional layers are imparted to be used in in packaging or agricultural, forestry and fisheries applications, and prevents the film from breaking due to tension, for example. When the degree of orientation in the in-plane direction of the film is too high, destruction may occur in the film due to stress during film conveyance in the post-processing step. In addition, when used as packaging material or agricultural, forestry and fishery materials, it may become the starting point for partial destruction such as cracks caused by punctures with protrusions of the contents, etc., or it may break easily because the area stretching ratio is required to be increased during film production, and thus productivity may be poor. Therefore, (N12 - Nz) is preferably 0.015 or less. From the viewpoint described above, (N12 - Nz) is more preferably 0.003 or more, and even more preferably 0.004 or more. Moreover, from the viewpoint described above, (N12 - Nz) is more preferably 0.010 or less, even more preferably 0.009 or less, and particularly preferably 0.008 or less. The method of controlling (N12 - Nz) within the above ranges is not particularly limited, but a preferred example is a method similar to the method of controlling L1 and L2 described above.

For the polyhydroxyalkanoic acid film of the present invention, in wide-angle X-ray diffraction in the thickness direction using a CuKα radiation, the crystallite size obtained from a half width of PB is preferably 5 nm or more and 60 nm or less, where PB is the peak with the highest intensity among the peaks with a degree of orientation of 0.50 or more at a diffraction angle 2θ in the range of 19° or more and 21° or less. The above diffraction peaks are derived from the crystal structure of the polyhydroxyalkanoic acid that contributes to the puncture strength, flexibility, and biodegradability. When the degree of orientation is 0.50 or more, the crystal structure having excellent biodegradability is present in the film, but its orientation in the planar direction increases, making it less likely to become the starting point of breakage upon impact, and also increasing the flexibility of the film. By setting the crystallite size of the crystals with such degree of orientation to 5 nm or more, it is possible to form the crystal structure in the film, which has excellent biodegradability and sufficiently high orientation to further improve the biodegradability of the polyhydroxyalkanoic acid film. In addition, it is possible to suppress sagging during vapor deposition processing and conveyance, which may occur when the present film is used in packaging or agricultural, forestry and fisheries applications, and to suppress breakage of the film due to tension, for example. Furthermore, by setting the crystallite size to 60 nm or less, the above crystal structure can be allowed to exist without growing excessively during the production process, and a decrease in the strength of the polyhydroxyalkanoic acid film can be prevented. In addition, when the film is used for packaging or agriculture, forestry, and fisheries applications, for example, it is possible to prevent the film from deforming excessively and to reduce deterioration of properties caused by cracking or cleavage at the time of providing the functional layer such as vapor deposition. It is also possible to improve biodegradability. From the viewpoint described above, the crystallite size is more preferably 7 nm or more, even more preferably 9 nm or more, and particularly preferably 11 nm or more. In addition, from the viewpoint described above, the crystallite size is more preferably 50 nm or less, even more preferably 40 nm or less, still more preferably 30 nm or less, particularly preferably 25 nm or less, and most preferably 20 nm or less. The measurement by wide-angle X-ray diffraction in the thickness direction using a CuKα radiation is performed by the methods described in Examples. The method of controlling the crystallite size within the above range is not particularly limited, but examples thereof include a method in which the degree of orientation is controlled by the method described above and then the stretching ratio in the stretching step during film formation and the heat treatment temperature during the heat treatment and relaxation treatment steps are adjusted, as described below. More specifically, the crystallite size produced in the preheat section can be controlled in a preferred range by physical stretching stress by setting the longitudinal stretching ratio to 1.5 to 4.2 times, the horizontal stretching ratio to 1.5 to 4.2 times, or the area ratio to 4 to 18 times. In addition, crystal growth can be controlled by heat treatment at (melting point of polyhydroxyalkanoate resin (°C) - 100°C) to (said melting point (°C) - 10°C) after the biaxial stretching. When the stretching ratio is lower than the above range, the crystal size may remain coarse after film formation, and when the stretching ratio is higher than the above range, the crystal size may become excessively small. When the heat treatment temperature is lower than the above range, crystal growth may be insufficient, and when the heat treatment temperature is higher than the above range, only coarse crystals that have grown may remain.

From the viewpoint of preventing a decrease in strength due to excessive crystal orientation, the degree of orientation is more preferably 0.99 or less. From the viewpoint described above, the degree of orientation is more preferably 0.75 or more, even more preferably 0.90 or more, and particularly preferably 0.95 or more. In addition, from the viewpoint described above, the degree of orientation is more preferably 0.98 or less, and particularly preferably 0.97 or less. In addition, from the viewpoint of properly measuring a film with high orientation in the planar direction, when determining the crystal degree of orientation by the method described in Examples, it is preferable that the peak position (hereinafter also referred to as orientation angle) with the highest intensity in the orientation profile is within an azimuthal angle of 90° ± 10°. The method of controlling the degree of orientation within the above range is not particularly limited, but one example is a method in which the conveying speed between the casting drum step and the longitudinal stretching step during film formation is adjusted, and thus the generated crystals are preliminarily oriented, and then the biaxially stretched.

The weight average molecular weight Mw of the polyhydroxyalkanoic acid film of the present invention is not particularly limited, but is preferably $5.0 \times 10^4$ to $2.0 \times 10^6$, more preferably $1.0 \times 10^5$ to $1.50 \times 10^6$, and most preferably $2.5 \times 10^5$ to $1.0 \times 10^6$, from the viewpoint of achieving both the puncture strength and the film formation stability after biaxial stretching.

The polyhydroxyalkanoic acid film of the present invention has a content of polyhydroxyalkanoate resin of more than 50% by mass and 100% by mass or less, taking the total mass of the film as 100% by mass, from the viewpoint of achieving good composting at room temperature and good marine biodegradability. The polyhydroxyalkanoate resin is a polymer containing hydroxyalkanoic acid as a constituent, and examples thereof include poly(3-hydroxyalkanoate) (also referred to as P3HA) containing 3-hydroxyalkanoate repeating unit of the general formula: [-CHR- CH$_2$-CO-O-] (in the formula, R is an alkyl group of C$_n$H$_{2n+1}$, where n is an integer from 1 to 15). The hydroxyalkanoic acid constituting the hydroxyalkanoate resin may be a homopolymer of only one type, or a copolymer of two or more types. The polyhydroxyalkanoate resin of the present invention may be a mixture of a plurality of hydroxyalkanoate resins.

Examples of P3HA include poly(3-hydroxybutyrate) (P3HB), poly(3-hydroxyvalerate) (P3HV), poly(3-hydroxybutyrate-co-3-hydroxyvalerate) (P3HB3HV), poly(3-hydroxybutyrate-co-3-hydroxyhexanoate) (P3HB3HH), poly(3-hydroxybutyrate-co-3-hydroxyvalerate-co-3-hydroxyhexanoate) (P3HB3HV3HH), poly(3-hydroxybutyrate-co-4-hydroxybutyrate) (P3HB4HB), poly(3-hydroxybutyrate-co-3-hydroxyoctanoate) (P3HB3HO), and poly(3-hydroxybutyrate-co-3-hydroxydecanoate) (P3HBP3HD). Note that -co- means copolymerized.

P3HA can be either chemically synthesized (e.g., obtained by ring-opening polymerization of the corresponding lactone) or produced by microorganisms, but P3HA produced by microorganisms is preferred from the viewpoint of ease of production using biomass raw materials such as vegetable oils. Among the P3HAs produced by microorganisms, P3HB, P3HV, P3HB3HH, P3HB3HV, P3HB3HV3HH, and P3HB4HB are preferably used, from the viewpoint of ease of industrial production.

The melting point and crystallinity of the polyhydroxyalkanoate resins such as P3HA can be adjusted by changing the composition ratio of the repeating units. It is generally known that polyhydroxyalkanoate resins are susceptible to thermal decomposition, but by designing them to have a low melting point as a copolymer of two or more types of hydroxyalkanoic acid, it is possible to lower the extrusion processing temperature.

The weight average molecular weight Mw of the polyhydroxyalkanoate resin used in the polyhydroxyalkanoic acid film of the present invention is not particularly limited, but is preferably $1.0 \times 10^5$ to $2.0 \times 10^6$, more preferably $3.0 \times 10^5$ to $1.5 \times 10^6$, and most preferably $4.0 \times 10^5$ to $1.0 \times 10^6$, from the viewpoint of achieving both the puncture strength and the film formation stability after biaxial stretching.

The polyhydroxyalkanoic acid film of the present invention preferably contains the crystal nucleating agent from the viewpoint of enhancing the puncture strength of the film and controlling the crystallite size. The crystal nucleating agent is a nucleating agent having the property of increasing the crystallinity of the film, and examples of such a crystal nucleating agent include fatty acid amides, urea derivatives, sorbitol compounds, boron nitride, fatty acid salts, and aromatic fatty acid salts. In the present invention, polyhydric alcohols such as pentaerythritol, galactitol, and mannitol, orotic acid, aspartame, cyanuric acid, glycine, zinc phenylphosphonate, and boron nitride. are preferred. Among them, pentaerythritol is more preferred because it is particularly effective in promoting the crystallization of the poly(3-hydroxyalkanoate) resin component. The content of the crystal nucleating agent is preferably 0.1 mass% or more and 5 mass% or less, taking the total mass of the polyhydroxyalkanoic acid film as 100% by mass. From the viewpoint of effect of improving the puncture strength of the film and making it easier to control the crystallite size, the content of the crystal nucleating agent is more preferably 0.3 mass% or more, and even more preferably 0.5 mass% or more. On the other hand, from the viewpoint of saturation of the effect as a nucleating agent or cost effects due to excessive addition, the content of the crystal nucleating agent is preferably 5 mass% or less, and even more preferably 3 mass% or less.

The polyhydroxyalkanoic acid film of the present invention may contain various additives, such as organic particles, inorganic particles, antioxidants, heat stabilizers, slip agents, antistatic agents, anti-blocking agents, fillers, viscosity modifiers, and anti-coloring agents, to the extent that the object of the present invention is not impaired.

The polyhydroxyalkanoic acid film of the present invention can be widely used for a variety of applications, including packaging application, mold release application, packaging materials or packing material, hygiene products, agricultural, forestry, and fishery products, building products, medical products, and the process film in the production of various products. For example, it can be used as a polyhydroxyalkanoic acid film with good barrier properties without breaking or deforming under the transport tension of the processing step and vapor deposition step when used for packaging application, or as a polyhydroxyalkanoic acid film for agriculture, forestry, and fisheries because of its biodegradability.

The thickness of the polyhydroxyalkanoic acid film of the present invention can be set according to the application. For example, among general packaging, mold release, and agriculture, forestry, and fisheries applications, in applications in which it is used in the sheet form, the thickness is preferably 6 $\mu$m or more and 200 $\mu$m or less. From the viewpoint of handling during processing and use, the thickness is more preferably 100 $\mu$m or less, and even more preferably 50 $\mu$m or less. The thickness is more preferably 8 $\mu$m or more, and even more preferably 10 $\mu$m or more. In addition, in various applications including a molding step such as tray molding or applications requiring self-supporting properties, the thickness is preferably 10 $\mu$m or more and 300 $\mu$m or less from the viewpoints of processability and handling property, and is more preferably 250 $\mu$m or less, and even more preferably 220 $\mu$m or less from the viewpoints of cost and film formability. The thickness is more preferably 30 $\mu$m or more, and even more preferably 50 $\mu$m or more.

<Polyhydroxyalkanoic acid film having functional layer>

The polyhydroxyalkanoic acid film of the present invention is preferably provided having a functional layer depending on the application, and the polyhydroxyalkanoic acid film having a functional layer is described below. The polyhydroxyalkanoic acid film of the present invention having the functional layer provided thereon may be referred to simply as a "laminate". Examples of the functional layer that can be laminated on the polyhydroxyalkanoic acid film include a gas barrier layer, an adhesive layer, a heat seal layer, an adhesion promoting layer, a colored layer, a printing layer, an easy peel layer, a release layer, a slip layer, a porous layer, and a nonwoven fabric. The method of laminating the functional layer can be selected depending on the functional layer. For example, lamination can be performed by vapor deposition, sputtering, coating, various printing methods such as gravure and offset printing, heat bonding, or lamination through an adhesive layer. For example, when the polyhydroxyalkanoic acid film of the present invention is used for packaging application, a coating layer that imparts gas barrier property, or the vapor deposition layer or the heat seal layer is preferably selected as the functional layer. For example, when the polyhydroxyalkanoic acid film of the present invention is used for coating the agricultural, forestry and fishery contents, such as fertilizer, feed, seeds and seedlings, and chemicals, an adhesive layer that imparts pressing property or a heat seal layer that imparts heat pressing property is preferably selected as the functional layer that imparts adhesive property. From the viewpoint of not impairing the effect of the present invention, the functional layer preferably has biodegradability or low toxicity. Examples of the functional layer that can be preferably laminated, for example, when used for packaging applications or for agriculture, forestry, and fisheries, include a coating layer that imparts gas barrier property and a vapor deposition layer. The functional layer is more preferably the vapor deposition layer from the viewpoint of exhibiting high gas barrier performance.

When a vapor deposition layer is laminated as the functional layer on the polyhydroxyalkanoic acid film of the present invention, the vapor deposition layer is preferably laminated on at least one side of the film. The vapor deposition layer is preferably a layer (layer D) containing a total of more than 50% by mass and 100% by mass or less of metal and inorganic compound, from the viewpoint of development of gas barrier property. The term "layer containing a total of more than 50% by mass and 100% by mass or less of metal and inorganic compound" refers to either a layer containing more than 50% by mass metal only, a layer containing more than 50% by mass inorganic compound only, or a layer containing both metal and inorganic compound the sum of which is more than 50% by mass, taking all components constituting the layer as 100% by mass. As the metal and/or inorganic compound that can be used for the layer D, from the viewpoints of improving the adhesion with the film, improving the gas barrier property when laminated on the film, and reducing the environmental load, any of aluminum, aluminum oxide, silicon oxide, germanium oxide, magnesium oxide, cerium oxide, calcium oxide, diamond-like carbon film, or a mixture thereof is preferably used. From the viewpoint of visibility of the contents, it is more preferable to use an inorganic compound, in particular aluminum oxide, silicon oxide or a mixture containing them. The thickness of the layer D in the laminate is preferably 200 nm or less from the viewpoints of recyclability and suppressing degradation of gas barrier properties due to cracks when the laminate is reused as a resin or film, and of obtaining visibility of the contents when used as a packaging material. From the above viewpoint, the thickness of the layer D in the laminate is more preferably 110 nm or less, even more preferably 50 nm or less, and particularly preferably 30 nm or less. The lower limit is not particularly limited, but from the viewpoint of development of barrier property, the thickness of the layer D in the laminate is preferably 1 nm or more.

In the laminate of the present invention, a resin layer having a thickness of 1 μm or less may be provided between the layer D and the surface of the polyhydroxyalkanoic acid film by coating or the like. By providing such a resin layer, an effect such as improving the adhesion between the layer D and the polyhydroxyalkanoic acid film can be obtained in some cases. However, from the viewpoint of production costs, an aspect that does not have the resin layer, i.e., an aspect in which the layer D is laminated directly onto the outermost surface of the polyhydroxyalkanoic acid film is preferred.

Examples of the method of forming the layer D on the polyhydroxyalkanoic acid film of the present invention to obtain the laminate include coating, vapor deposition, and lamination. Vapor deposition is particularly preferred because it is not humidity dependent and can develop excellent gas barrier property in a thin film. As the vapor deposition method, physical vapor deposition methods such as vacuum vapor deposition method, electron beam (EB) vapor deposition method, sputtering, and ion plating method, and various chemical vapor deposition methods such as plasma CVD can be used. From the viewpoint of the productivity, the vacuum vapor deposition method is particularly preferably used.

In addition, in the laminate of the present invention, an overcoat layer may be provided on the layer D in order to improve the gas barrier property and prevent degradation of the gas barrier property due to vapor deposition defects or cracks in the layer D.

When a layer (layer E) imparting adhesiveness such as an adhesive layer or heat seal layer is laminated as a functional layer on the polyhydroxyalkanoic acid film of the present invention, they are preferably laminated on at least one side of the film. As the resin components that can be used for the layer E, for example, polyethylene, polypropylene, ethylene-vinyl acetate copolymer, ethylene-propylene random copolymer, ethylene-propylene block copolymer, ethylene-methacrylic acid copolymer, or mixtures thereof are suitable from the viewpoint of having high heat seal strength. When a plurality of films are laminated, from the viewpoint of reducing the thickness of the final product, for example, any one of ethylene-vinyl acetate copolymer (EVA)-based hot melt adhesives, olefin-based hot melt adhesives, rubber-based hot melt adhesives, polyester-based hot melt adhesives, polyamide-based hot melt adhesives, polyurethane-based hot melt adhesives, etc., or mixtures thereof are more suitably used. From the viewpoint of increasing the biodegradability of the laminate as a whole, it is more preferable to use, for example, a resin component prepared by adjusting the copolymerization component of the polyhydroxyalkanoic acid exemplified above, or a biodegradable resin having a softening point or melting point lower than that of the polyhydroxyalkanoic acid film of the present invention, such as polylactic acid, polyglycolic acid, polybutylene succinate, or a mixture thereof.

The thickness of layer E in the laminate is preferably 0.5 μm or more, more preferably 1.0 μm or more, and even more preferably 3.0 μm or more, from the viewpoint of realizing high adhesive strength. In addition, from the viewpoint of preventing a degradation of biodegradability of the laminate and of reducing the thickness of the final product when multiple films are laminated, the thickness of layer E in the laminate is preferably 100 μm or less, more preferably 70 μm or less, and even more preferably 50 μm or less.

In the laminate, a resin layer having a thickness of 1 μm or less may be provided between the layer E and the surface of the polyhydroxyalkanoic acid film by coating or the like. By providing such a resin layer, an effect such as improving the adhesion of the layer E and the polyhydroxyalkanoic acid film can be obtained in some cases. However, from the viewpoint of production costs, an embodiment that does not have the resin layer (i.e., an aspect in which the layer E is laminated directly onto the outermost surface of the polyhydroxyalkanoic acid film) is preferred, and an aspect in which the layer E is on the surface of the polyhydroxyalkanoic acid film is more preferred.

As a method of forming layer E on the polyhydroxyalkanoic acid film of the present invention to obtain the laminate, coating or lamination is particularly preferred. As the coating method, a bar coating method, a gravure coating method, a calender coating method, a die coating method, and the like can be used, and as the lamination method, a dry lamination method, a solventless lamination method, a extrusion lamination method, a co-extrusion method, and the like can be used, but from the viewpoint of the productivity, the gravure coating method, the die coating method, the extrusion lamination method, and the co-extrusion method are more preferably used.

<Packaging materials and package>

The packaging material and package of the present invention will be described below. The packaging material of the present invention is characterized by using at least one of the polyhydroxyalkanoic acid film of the present invention and the laminate of the present invention. The packaging material of the present invention does not break or deform even under the transport tension of the vapor deposition processing step of the vapor deposition layer, which is provided as the gas barrier layer, and has good gas barrier properties, and therefore can be suitably used for packaging items that are easily deteriorated by water vapor or oxygen.

The package of the present invention is characterized in that the contents are packaged in the packaging material of the present invention. The contents are not particularly limited, but preferably those that require visibility from the outside and are susceptible to deterioration by water vapor or oxygen because the packaging material of the present invention has the transparency and gas barrier properties. The package of the present invention can be obtained by covering the contents with the packaging materials of the present invention, and the aspect thereof is not particularly limited. Examples include package obtained by processing the packaging material of the present invention into a bag shape by heat sealing and placing the contents therein, or package in which a tray-like container is filled or heaped with the contents and then sealed with the packaging material of the present invention.

<Agricultural, forestry and fishery materials>

The agricultural, forestry and fishery materials of the present invention will be described below. The agricultural, forestry and fishery materials of the present invention is characterized by using at least one of the polyhydroxyalkanoic acid film of the present invention and the laminate of the present invention. The agricultural, forestry and fishery materials of the present invention is characterized by its biodegradability and is suitable for use in materials that have the ability of biodegrading after use, such as soil mulch film, vegetation film, fumigation film, water retention film, fertilizer coating material, feed coating material, seed coating material, chemical coating material, aquaculture support film, antifouling film, the environmental conservation material.

<Covering film for agricultural, forestry and fishery contents>

The polyhydroxyalkanoic acid film of the present invention can be used to cover the agricultural, forestry and fishery contents, which contains one or more selected from fertilizer, feed, seeds and seedlings, and chemicals, to protect the covered agricultural, forestry and fishery contents and prevent quality degradation due to deterioration and environmental pollution due to leakage, while biodegrading in soil or ocean, allowing the fertilizer, feed, and chemical to be diffused and scattered at the appropriate time, or to protect the seeds and seedlings until they are established and planted, and then biodegrade, preventing them from hindering the growth of the seeds and seedlings. The agricultural, forestry and fishery contents referred to here mean the materials and components contained in the agricultural, forestry and fishery materials, and are not particularly limited as long as they do not impair the effects of the present invention, but any known materials can be widely used. As mentioned above, by using the polyhydroxyalkanoic acid film of the present invention, which has excellent biodegradability, high strength, and moderate flexibility, for this application, it is possible to prevent leakage of the contents, the agricultural, forestry and fishery contents, through pinholes, cracks, or areas with uneven coating thickness, and the thickness of the polyhydroxyalkanoic acid film of the present invention makes it possible to control the diffusion and scattering speed in the soil and ocean. In addition, two or more types of fertilizer, feed, seeds and seedlings, and chemicals of the agricultural, forestry and fishery contents can be coated together. For example, it is preferable to cover the seeds and seedlings with the fertilizers or chemicals to be applied, as this makes it also possible to enhance the growth of the crops at the same time as germination.

From the viewpoint described above, it is preferable to select the thickness of the polyhydroxyalkanoic acid film within the above-mentioned preferred range according to the diffusion and scattering speed in the soil or ocean. When the thickness of the polyhydroxyalkanoic acid film is excessively thin, the strength may be insufficient, which may result in reduced protection of the contents or breakage during processing. When the polyhydroxyalkanoic acid film is excessively thick, the flexibility may be insufficient, making it difficult to process the film into a preferred shape described below. For example, a thin film with a thickness that allows fast-acting fertilizers to diffuse and disperse quickly after biodegradation and a thick film with a thickness that allows slow-acting fertilizers to diffuse and disperse slowly after biodegradation can be selected, and the coated fertilizers can be spread together to reduce the work of farmers.

Furthermore, the coating can be the multilayer structure, taking advantage of the characteristics of the polyhydroxyalkanoic acid film. Specifically, by coating the slow-acting fertilizer with the polyhydroxyalkanoic acid film of the present invention and then covering the surrounding area with the fast-acting fertilizer and the polyhydroxyalkanoic acid film of the present invention, it is possible to produce a fertilizer in which the slow-acting and fast-acting fertilizers are in turn covered with the polyhydroxyalkanoic acid film of the present invention. In addition, by covering the seeds with fertilizer, feed, and chemicals in turn in the same manner, it is possible to have the fertilizer, feed, and chemicals applied to the grown agricultural and marine products at the appropriate time.

The agricultural, forestry and fishery contents coated by the polyhydroxyalkanoic acid film of the present invention can enhance the efficacy of the agricultural, forestry and fishery contents, especially selected from fertilizers, feeds, seeds and seedlings, and chemicals, while preventing environmental pollution due to unintended leakage, as described above, and diffuse in the soil and ocean at appropriate times, by diffusing and dispersing at the appropriate time in the soil and ocean, it is possible to improve the efficacy and reduce the workload of workers, making it particularly suitable for use in the fields of agriculture, forestry, and fisheries.

The forms of the fertilizer, feed, seeds and seedlings, and chemicals that are coated with the polyhydroxyalkanoic acid film of the present invention are not particularly limited as long as they do not impair the effects of the present invention, and can be used in a variety of forms, including those of pellet form, granular form, block form, pouch form, rope form, and sheet form. Specifically, for agricultural coated fertilizers, the block form, the pellet form, and the granular form, which are compatible with spreaders, are preferred, and for coated seeds and seedlings, the rope form and the sheet form, which are expected to reduce work, are preferred.

<Production method>

A preferred aspect of the method of producing a polyhydroxyalkanoic acid film of the present invention will now be described.

One preferred aspect of the method of producing the polyhydroxyalkanoic acid film of the present invention includes performing, in this order, a melting step of melting a polyhydroxyalkanoate resin, a casting step of melting the resin and extruding it from a nozzle into a sheet form and cooling and solidifying it on a substrate to obtain a polyhydroxyalkanoic acid sheet, a stretching step of stretching the polyhydroxyalkanoic acid sheet in two orthogonal directions, and a heat treatment process of subjecting the film obtained in the stretching step to a heat treatment and the relaxation treatment. Furthermore, the polyhydroxyalkanoic acid film of the present invention is not particularly limited in terms of the layer structure. For example, a two-type, two-layer structure of layer A/layer B, a two-type, three-layer structure of layer A/layer B/layer A, a three-type, three-layer structure of layer A/layer B/layer C (layer C means a layer different from layers A and B), or the like can be used. The polyhydroxyalkanoic acid film of the single layer structure composed of layer A will be used as an example below to more specifically describe its production method, but the polyhydroxyalkanoic acid film of the present invention and its production method are not necessarily to be construed to be limited thereto.

First, the polyhydroxyalkanoate resin is melted in a single screw extruder. The resin is melt extruded from the single screw extruder set at extrusion temperature of 150°C to 220°C, and passed through a filtration filter to remove foreign matter and the like. Subsequently, this molten resin is extruded from the slit die. At this time, from the viewpoint of preventing deterioration of the polyhydroxyalkanoate resin and increasing the puncture strength of the film, it is preferable to control the oxygen concentration in the raw material feeding hopper to 0.10% by volume or less.

Next, the molten resin sheet extruded from the slit die is cooled and solidified on a casting drum whose surface temperature is controlled to 10°C to 40°C to obtain an unstretched polyhydroxyalkanoic acid film. As the method of adhering the molten sheet to the casting drum, any of an electrostatic pinning method, an adhesion method utilizing the surface tension of water, an air knife method, a press roll method, an underwater casting method, an air chamber method, or a combination of two or more of the methods may be used.

With regard to the polyhydroxyalkanoic acid film of the present invention, from the viewpoint of increasing the film strength after the biaxial stretching, a method can be preferably used in which the film conveying speed at the inlet of the longitudinal stretching, which is the next step, is adjusted to be faster than the speed at the outlet of the casting drum, thereby increasing the molecular chain orientation of the unstretched polyhydroxyalkanoic acid film. More specifically, the film conveying speed at the inlet of the longitudinal stretching is preferably 101% or more and 125% or less relative to the speed at the outlet of the casting drum. From the viewpoint of obtaining greater improvement effect for puncture strength of the film, the film conveying speed at the inlet of the longitudinal stretching is more preferably 103% or more, and even more preferably 106% or more relative to the speed at the outlet of the casting drum. On the other hand, from the viewpoint of productivity such as film breakage, as for the upper limit, the film conveying speed at the inlet of the longitudinal stretching is more preferably 116% or less, and even more preferably 112% or less relative to the speed at the outlet of the casting drum.

Next, a uniaxially oriented film is obtained in the longitudinal stretching step. In the longitudinal stretching step, preheating is performed using a plurality of roll groups for 1 second or more and 1000 seconds or less, in which the preheating temperature is preferably equal to or more than the casting drum temperature, more preferably equal to or more than the casting drum temperature plus 10°C. The preheating temperature is preferably equal to or less than the casting drum temperature plus 50°C, more preferably equal to or less than the casting drum temperature plus 40°C. Preheating is done by passing the film between the rolls kept at the preheating temperature. In this case, by setting the preheating temperature to the temperature equal to or more than the casting drum temperature and equal to or less than the casting drum temperature plus 50°C, the growth of spherulites and spherulite transformation immediately before stretching can be controlled, enabling stable stretching even at high stretching ratio. Next, immediately before stretching, the polyhydroxyalkanoic acid film is stretched in the longitudinal direction at a ratio of 1.5 times or more and 10 times or less at 100°C or more and the melting point of the polyhydroxyalkanoate resin or less for 0.1 seconds or more and 100 seconds or less while maintaining the temperature. From the viewpoint of improving the puncture strength and from the viewpoint of the film formation stability, the stretching ratio in the longitudinal direction is preferably 1.6 times or more, more preferably 2.1 times or more, even more preferably 2.4 times or more, and particularly preferably 2.6 times or more. On the other hand, the stretching ratio is preferably 8 times or less, more preferably 4 times or less. After the longitudinal stretching, the film is cooled to room temperature to obtain a uniaxially oriented film.

Next, while the end parts of the uniaxially oriented film are gripped by the clip, the film is guided to the tenter, and the film is stretched (transverse stretching) at a ratio of 1.5 times or more and 10 times or less in the width direction while the end parts of the film are still gripped by the clip and the temperature is maintained at the temperature of 60°C or more and the melting point of the polyhydroxyalkanoate resin or less. From the viewpoint of improving the puncture strength and from the viewpoint of the film formation stability, the stretching ratio in the width direction is preferably 1.6 times or more, more preferably 2.1 times or more, even more preferably 2.4 times or more, and particularly preferably 2.6 times or more. On the other hand, the stretching ratio is preferably 8 times or less, more preferably 4 times or less.

The area stretching ratio is preferably 4 times or more. By setting the area stretching ratio to four or more times, the molecular chain tension in the film surface increases, the crystallite size becomes smaller, and the puncture strength of the film can be increased. The moderate in-plane distortion prevents expansion upon heating, and suppress defects such as pinholes and cracks occurring in the layer D, or so-called heat defeat, and wrinkling phenomena, when the layer D is formed by vapor deposition to make a laminate. The area stretching ratio is more preferably 6 times or more, even more preferably 8 times or more. The upper limit of the area stretching ratio is not limited, but from the viewpoint of feasibility, the area stretching ratio is preferably 50 times or less, more preferably 35 times or less, and even more preferably 20 times or less for sequential biaxial stretching.

In the production of the polyhydroxyalkanoic acid film of the present invention, it is preferable to apply heat treatment and relaxation treatment after the transverse stretching. The heat treatment and the relaxation treatment is performed preferably at 50°C or more and 150°C or less for 1 second or more and 100 seconds or less while giving relaxation of 2% or more and 20% or less in the width direction at a rate of 10 %/min or more and 500 %/min or less, with both ends in the width direction tensely gripped with clips of the tenter. The heat treatment temperature is more preferably 55°C or more, even more preferably 60°C or more. The heat treatment temperature is more preferably 145°C or less, even more preferably 140°C or less. The relaxation treatment rate is more preferably 350 %/min or less, even more preferably 200 %/min or less. The relaxation treatment rate is more preferably 15 %/min or more, even more preferably 20 %/min or more. The heat treatment time is more preferably 60 seconds or less, even more preferably 45 seconds or less. The heat treatment time is more preferably 4 seconds or more, even more preferably 8 seconds or more. By performing the relaxation treatment and heat treatment, the structural stability of the film against heat can be improved and the heat defeat phenomenon can be suppressed, in which defects such as pinholes and cracks form in the layer D when the layer D is formed by vapor deposition to provide a laminate. As a result, the barrier property of the laminate obtained from the polyhydroxyalkanoic acid film can be improved. In the relaxation treatment, from the viewpoint of increasing the structural stability of the film against heat, the relaxation ratio is more preferably 2% or more, and even more preferably 4% or more. The relaxation ratio is more preferably 15% or less, even more preferably 11% or less. When the relaxation ratio is less than 2%, the resulting polyhydroxyalkanoic acid film may be inferior in the dimensional stability upon heating. Therefore, when the layer D is formed by vapor deposition to provide a laminate, the film may deform and defects such as pinholes and cracks may occur in the layer D, sometimes resulting in an impaired barrier property of the laminate with layer D laminated thereon. On the other hand, when the relaxation ratio is more than 20%, the film may excessively loosen inside the tenter, resulting in wrinkling of the film after film formation, sometimes leading to degraded mechanical properties, and unevenness during deposition.

After the above heat treatment, the film is guided to the outside of the tenter, where the clips at both ends in the width direction of the film are released in a room temperature atmosphere, and the edge portions at both ends in the width direction of the film is slitted in a winding process. After that, it is preferable to apply in-line surface modification treatment such as corona treatment to the surface (usually surface on the side in contact with the casting drum) on which the layer (layer D) containing more than 50% by mass and 100% by mass or less of metal and inorganic compound in total is to be laminated, in order to increase the adhesion strength with the D layer. The resulting film can be rolled to obtain the polyhydroxyalkanoic acid film of the present invention.

Next, the production method of fertilizers, feeds, seeds and seedlings, and chemicals coated with the polyhydroxyalkanoic acid film of the present invention will be described more specifically by way of example, which should not be construed as limited thereto.

In the method of producing fertilizers coated with the polyhydroxyalkanoic acid film of the present invention, the polyhydroxyalkanoic acid film obtained by the above method is introduced into the upper and lower molds, which are formed into pellet-shaped depressions, and then the film is adhered to the molds by suction. Next, the fertilizer to be coated is spread onto the film of the lower mold, and the upper mold is lowered and heated to bond the upper and lower films together.

The fertilizer to be coated with the polyhydroxyalkanoic acid film of the present invention may be of the pellet form, and those of the granular form, the powder form, the paste form, and the liquid form can also be used. In particular, from the viewpoint of ease of protection with film and ability to conform to the shape of a mold, it is preferable that the fertilizer be of the granular form, the powder form, the paste form, or the liquid form.

Furthermore, from the viewpoint of adhesion, it is preferable to provide the polyhydroxyalkanoic acid film of the present invention with the aforementioned heat seal layer as an adhesive layer (layer E), and in this case, it is more preferable to arrange the film in the mold such that the layer E is located on at least one side of the surface where the films are in contact with each other.

Next, the film covered with fertilizer is removed from the mold, and the excessive film-to-film compressed area is cut and removed to obtain the coated fertilizer processed into the pellet form. A preferable cutting method herein is to use a cutting machine equipped with a blade. Example of the methods include a method of sheet treatment in a batch system using a mold with blades arranged in advance, a method in which a film is cut continuously in one direction using a rotary blade to process it into a rope form and then cutting it periodically in the orthogonal direction, and a method in which heat pressing and cutting are performed at the same time by blades mounted on the mold mentioned above.

Examples of other methods of coating the agricultural, forestry and fishery contents include a method in which two rolls of the polyhydroxyalkanoic acid film of the present invention are prepared, and laminated while inserting the agricultural, forestry and fishery contents between the rolls at regular intervals, a method in which the agricultural, forestry and fishery contents are heated in a state of being held on the film for thermal shrinkage, and a method of coating by shrinking the film under **the reduced** pressure.

According to this production method, it is possible to obtain fertilizers, feed, seeds and seedlings, and chemicals coated with the polyhydroxyalkanoic acid film of the present invention, which has excellent biodegradability, strength, and flexibility.

<Decomposition method >

The polyhydroxyalkanoic acid film of the present invention, and the packaging body and agricultural, forestry and fishery materials including the polyhydroxyalkanoic acid film of the present invention can be biodegraded with compost equipment. Composting equipment that can be used includes well-known equipment such as industrial compost, which raises or keeps temperature around 60°C to increase biodegradability, simple compost made by digging holes in the soil, compost containers that are partially or completely buried in the soil, small compost equipment such as compost bags, and biological compost equipment such as vermicompost and zoo compost using flies. When the polyhydroxyalkanoic acid film of the present invention, and the packaging body and agricultural, forestry and fishery materials including the polyhydroxyalkanoic acid film of the present invention have no functional layer, or when the functional layer is a biodegradable or low-toxic vapor deposition layer, they can be decomposed by charging them into the compost equipment and subjecting them to general treatment such as mixing with soil or materials for decomposition such as microbial fermentation accelerator. When the functional layer or other layers that are not biodegradable are used in combination, the functional layer can be peeled off and then placed in composting equipment, or when the layer has low toxicity, such as environmental toxicity or human toxicity, it can be placed in compost equipment even if it is not biodegradable, and the residue can be collected after decomposition of the polyhydroxyalkanoic acid film of the present invention. The purposes of composting include reducing waste by reducing volume, composting, and generating biogas, and the polyhydroxyalkanoic acid film, packaging body and agricultural, forestry and fishery materials of the present invention are suitable for compost equipment for any purpose.

Examples

The present invention will be described in more specifically below with reference to examples, but the present invention is not limited to the aspects shown below. The evaluation of each item was performed by the following methods.

<Methods of measuring characteristic values and evaluating effects>

The methods of measuring the characteristic values and evaluating the effects in the present invention are as follows.

(1) Thickness of film

The thickness of the polyhydroxyalkanoic acid film was measured at five arbitrary locations in an atmosphere of 23°C and 65%RH using a contact-type High-accuracy Digital Length Measurement Machine: LITEMATIC VL50B manufactured by Mitutoyo Corporation. The arithmetic average of the thicknesses at the 10 locations was taken as the film thickness (unit: $\mu$m).

(2) Determination of main orientation axis direction and direction orthogonal to main orientation axis direction

The flow direction (MD) in the film production step was defined as the main orientation axis direction, and the direction (TD) orthogonal to the flow direction in the film production step in the film surface was defined as the direction orthogonal to the main orientation axis direction. For films with unknown direction, the film was cut into a rectangle of 150 mm long × 10 mm wide with an arbitrary direction turning up to make a sample <1>, and the direction of the long side of the sample <1> was taken as 0°. Next, a sample <2> of the same size was taken such that the long side direction corresponds to the direction rotated 15° to the right from the 0° direction. In the same manner, the long side direction of the rectangular sample was rotated by 15°, and samples <3> to <12> were obtained similarly. Next, each rectangular sample is set in the tensile testing machine ("Tensilon Universal Testing Machine" RTG-1210 manufactured by A&D Company, Limited ) with an initial chuck distance of 30 mm such that the longitudinal direction corresponds to the tensile direction, and the tensile test is performed at a tensile speed of 300 mm/min in an atmosphere of temperature and humidity of 25 ± 5°C and 65 ± 10% RH. The maximum load that can be applied until the sample breaks is read and divided by the cross-sectional area of the sample before the test (film thickness determined (1) × width) to calculate the value as the tensile strength at break. The same measurements were made five times for each sample and the average value of the tensile strength at break was taken as the tensile strength at break (in MPa) of the sample. The long side direction of the sample where this value is maximum is regarded as the main orientation axis direction of the polyhydroxyalkanoic acid film. Furthermore, the direction orthogonal to this direction is taken as the direction orthogonal to the main orientation axis direction of the polyhydroxyalkanoic acid film.

(3) Puncture strength and puncture displacement

The puncture strength (Force) and the puncture displacement (Strain) of the film were measured according to JIS Z1707 (2019) under the following conditions. The measurement was made five times, each measurement was divided by the measured film thickness ($\mu$m) and then multiplied by 20 ($\mu$m) to obtain the average value, which was adopted as the puncture strength value (converted into a value at a thickness of 20 $\mu$m). As for the puncture displacement, the length of the needle pushed into the film from the time the tip of the measuring needle touched the film until the film was punctured or ruptured was determined and the shorter length was selected, and the average of the five measurements was used as the puncture displacement.

Device: HANDY-TYPE COMPRESSION TESTER KES-G5 manufactured by
KATO TECH CO., LTD.
(Measurement Conditions)
SENS:10
SPEED: 0.20 cm/sec
STROKE:20mm/10V
Needle diameter: 1.0 mm$\varphi$
Hole diameter: 10.0 mm$\varphi$

(4) Tensile strength at break (S1) in main orientation axis direction and tensile strength at break (S2) in direction orthogonal to main orientation axis direction

The tensile test was performed for the main orientation axis direction and the direction perpendicular to the main orientation axis direction, using the same sample dimensions, tensile testing machine, and measurement conditions as in (2). The measurements were performed five times, and the average value for the tensile strength at break at the time the sample broke was calculated to determine the tensile strength at break (S1) in the main orientation axis direction of the polyhydroxyalkanoic acid film and the tensile strength at break (S2) in the direction orthogonal to the main orientation axis direction (all in MPa).

(5) Shrinkage onset temperature T1 in main orientation axis direction, and shrinkage onset temperature T2 in direction orthogonal to main orientation axis direction according to thermomechanical analysis (TMA)

A rectangular sample of 4 mm wide and 50 mm long was cut out for each of a case where the long side corresponds to the main orientation axis direction and a case where the long side corresponds to the direction orthogonal to the main orientation axis direction, and clamped by the metal chuck of the thermomechanical analyzer described below such that the test length was 10 mm. Then, the thermal shrinkage curve was determined in the direction orthogonal to the main orientation axis direction and the main orientation axis direction of the film with sample length kept constant under the following temperature and load conditions. The temperature at which the film shrank by 1% was read for each of the main orientation axis direction and the direction orthogonal to the main orientation axis direction to obtain the shrinkage onset temperature T1 in the main orientation axis direction and the shrinkage onset temperature T2 in the direction orthogonal to the main orientation axis direction (both in °C).

·Device: TMA/SS6000 (manufactured by Seiko Instruments Inc.)
(Temperature conditions)
·Temperature: Initial temperature, 25°C; Maximum temperature: 160°C; Temperature rising rate: 10 °C/min

·Holding time after reached maximum temperature: 10 minutes
·Nitrogen cooling: Not done
(Load conditions)
·Control mode: F mode (under constant load in load control mode)
·Load: 29.4 mN (constant)

(6) |N1-N2| determined from refractive index N1 at wavelength of 1550 nm in main orientation axis direction and refractive index N2 at wavelength of 1550 nm in direction orthogonal to main orientation axis direction

The in-plane refractive index N1 in the main orientation axis direction and the in-plane refractive index N2 in the direction orthogonal to the main orientation axis direction were measured with a prism coupler, and the absolute difference between them was calculated.

·Device: PRISM COUPLER & LOSS MEASUREMENT SPA-4000 manufactured by SAIRON TECHNOLOGY,INC.
·AIR PRESSURE (pressing pressure): 0.5 MPa
·Prism: Prism : GGG (gadolinium gallium garnet, n = 1.965)
·Light source: 1550 nm diode laser.

(7) Birefringence (N12 - Nz)

The refractive index Nz in the thickness direction was measured using the same measurement method as in (6), and the birefringence in the thickness direction was calculated using the following formula:

$$\text{Birefringence (N12 - Nz)} = |(N1 + N2)/2 - Nz|$$

(8) Elongation at break(L1) in main orientation axis direction and elongation at break (L2) in direction orthogonal to main orientation axis direction

The tensile test was performed for the main orientation axis direction and the direction perpendicular to the main orientation axis direction, using the same sample dimensions, tensile testing machine, and measurement conditions as in (2). The measurements were performed five times, and the average value for the elongation at the time the sample broke was calculated to determine the elongation at break (L1) in the main orientation axis direction of the polyhydroxyalkanoic acid film and the elongation at break (L2) in the direction orthogonal to the main orientation axis direction (all in %).

(9) Melting points of polyhydroxyalkanoate resin and film

Measurements and analyses were performed using a differential scanning calorimeter (Thermo plus EVO2 DSCvesta manufactured by Rigaku Holdings Corporation) in accordance with JIS K7121-1987 and JIS K7122-1987. 5.0 mg of a sample was weighed, and the temperature was raised from -50°C to 200°C at a heating rate of 20 °C/min in a nitrogen atmosphere. At that time, the temperature at the apex of the endothermic peak obtained from the DSC curve was taken as the melting point of the polyhydroxyalkanoate resin and film. When a plurality of endothermic peaks were present, the peak with the highest endothermic value was adopted.

(10) Weight average molecular weight Mw of resin

5mL of a measurement solvent described below was added to 10 mg of a sample, and the mixture was stirred at room temperature until the sample was dissolved. Then, filtration was performed using a 0.45 $\mu$m filter, and the weight average molecular weight Mw was obtained using Gel Permeation Chromatography (GPC) under the following conditions.

·Detector: Differential refractometer RI (RI-8020, manufactured by Tosoh Corporation; sensitivity 32)
·Column: TSKgel GMHHR-M (7.8mm $\times$ 30 cm, manufactured by Tosoh Corporation), 2 columns
·Solvent: Chloroform
·Flow rate: 1.0 mL/min
·Column temperature: 40°C
·Injection volume: 0.200 mL
·Standard sample: Monodisperse polystyrene manufactured by Tosoh Corporation
·Data processing: GPC data processing system manufactured by Toray Research Center, Inc.

(11) Crystallite size

(11-1) Acquisition of two-dimensional diffraction images

Film samples were cut into 2 cm in the main orientation axis direction and 1 cm in the direction orthogonal to the main orientation axis, and the number of sheets such that a total thickness was 100 $\mu$m or more were directly stacked with the main orientation axis aligning in the same direction, and the sample was fixed in a holder such that X-rays were incident on the center of the sample in the direction perpendicular to the main orientation axis direction, and then the reflection measurement of the film in the thickness direction was performed under the following conditions to obtain a two-dimensional X-ray diffraction image.

Device: D8 DISCOVER $\mu$HR Hybrid manufactured by Bruker AXS
X-ray source: CuK$\alpha$ radiation (using multilayer mirror), wavelength $\lambda$ = 0.15418 nm
Output: 50 kV, 22 mA
Slit system: (X-ray source side) 1 mm$^2$ - 1 mm$^2$ - 0.1 mm$\Phi$ (sample side)
Detector: Two-dimensional detector (Vantec500)
Scan: 2$\theta$ = 20°
Elevation angle: $\omega$ = 10°
Camera length: 10 cm
Integration time: 300 sec/frame.

(11-2) Orientation profile

From the diffraction image obtained in (11-1), the range of diffraction angles (2$\theta$) in the range of 19° or more and 21° or less was scanned in 0.5° increments from 40° to 140° in azimuthal angle with 90° as the thickness direction, and the results were integrated to obtain an orientation profile.

(11-3) Orientation angle, degree of orientation

A baseline was established at the minimum value of the orientation profile obtained in (11-2), and the peak with the highest intensity among the peaks with a degree of orientation of 0.50 or more at a diffraction angle 2$\theta$ in the range of 19° or more and 21° or less was separated as PB using a Gaussian distribution function. The peak position at this time was designated as the orientation angle (°). The degree of orientation of PB was determined from the half width HO of the peak using the following formula:

$$\text{Degree of orientation} = (180 - HO)/180.$$

(11-4) 2$\theta$ profile in orientation direction

The range of the orientation angle obtained from (11-3) $\pm$ 10° was scanned in increments of 0.05°, and the results were integrated to obtain 2$\theta$ profile.

(11-5) Crystallite size

A baseline was established at the minimum value of the 2$\theta$ profile obtained in (11-4), and the peak with the highest intensity among the peaks with a degree of orientation of 0.50 or more at the diffraction angle 2$\theta$ in the range of 19° or more and 21° or less was separated using a Gaussian distribution function. The crystallite size (nm) was calculated from the half width of the peaks at the time of separation using the Scherrer formula. The Scherrer constant was set to 0.9, and the correction value of the half width was determined from the Si diffraction peak (111) by measuring standard Si powder for X-ray diffraction manufactured by NIST using the above optical system.

(12) Thermal shrinkage ratio H1 in main orientation axis direction and thermal shrinkage ratio H2 in direction orthogonal to main orientation axis direction of film obtained by heat treatment at 120°C for 15 minutes

The film is cut into a rectangle of 150 mm long × 10 mm wide for the main orientation axis direction and the direction orthogonal to the main orientation axis direction, and marks are made within 100 mm at the center with an oil-based marker. Then length measurement was made with a universal projector to determine the initial length I0. The sample that has been subjected to length measurement is then set in a gear-type hot air oven adjusted to 120°C, a 2.1 g load is attached to the bottom of the hanging film, and the sample is heat-treated for 15 minutes while rotating the gear. Thereafter, the film is removed and cooled to room temperature, and then the length between the marks is subjected to length measurement with a universal projector to determine the heat shrinkage length IH. A thermal shrinkage ratio (in %) at 120°C was calculated according to the following formula (5) using the measured I0 and IH. The same measurements were made five times for each sample in the main orientation axis direction and in a direction orthogonal to the main orientation axis direction, and the average value in the main orientation axis direction was H1 (%) and the average value in the direction perpendicular to the main orientation axis direction was H2 (%).

$$\text{Thermal shrinkage ratio at } 120°C \ (\%) = (\text{I0} - \text{IH})/\text{I0} \times 100 \quad \cdots \text{ formula (5).}$$

(13) Content of polyhydroxyalkanoate resin

The aliphatic polyester film was dissolved in hexafluoroisopropanol (HFIP) and the content of the polyhydroxyalkanoate resin (% by mass) was measured using $^1$H-NMR and $^{13}$C-NMR. In Examples and Comparative Examples, the composition was calculated from the content of the resin content at the time of film production.

(14) Biodegradability

One liter of wet synthetic compost was prepared according to JIS K6954 (2008) and fed in a 10 L polypropylene container. Next, the evaluation film cut into 5 cm $\times$ 5 cm was tucked in a polyethylene holder with a hollowed-out 2-cm square on the inside, so that the film inside the holder was exposed to the outside.

Thereafter, the film sample fixed by the holder was fed in the wet synthetic compost in a polypropylene container, and a 60-day culture test was performed in an oven controlled at 28 $\pm$ 2°C by a method in accordance with JIS K6954 (2008). When the film samples were fed, 2-cm square exposed area of the film in the holder was fully covered with wet synthetic compost. After the initial loading, the film sample was taken out every two days, the wet synthetic compost was stirred with a shovel, and the film sample was added again. This process was repeated.

Sixty days after initial feed, the film samples were removed from the container and photographed with a digital camera. The photographs were taken with a pixel count of 1200 dpi (2 million pixels) or more. The area of the sample remaining within a 2 cm square frame inside the holder was determined from the photographic image, and the disintegrated area ratio (%) was calculated using the formula (initial area of sample in holder - sample remaining area in holder)/ (initial area of sample in holder) $\times$ 100. A total of three holders were evaluated in the same compost, and the arithmetic average value of the three measured values was taken as the disintegrated area ratio (%) of the film sample, and evaluation was performed based on the following criteria.

A: Disintegration area ratio is 60% or more
B: Disintegration area ratio is 40% or more and less than 60%
C: Disintegration area ratio is 20% or more and less than 40%
D: Disintegration area ratio is 5% or more and less than 20%
E: Disintegration area ratio is less than 5%

The biodegradability of the film rated as A, B, C, or D is preferred.

(15) Occurrence of breakage when the conveying speed/tension is changed

A 300 mm wide, 200 m long film (wound on a 6 inch, 350 mm long core) was prepared and rewound on a 3 inch, 350 mm long core under the following conditions, and while increasing the conveying speed and tension, the film processability was determined based on the following criteria:

A: No breakage occurred even when rewinding at a speed of 10 m/min and a transport tension of 70 N/m
B: No breakage occurred when rewinding at a speed of 8 m/min and a transport tension of 70 N/m, but breakage occurred when the speed was changed to 10 m/min at a transport tension of 70 N/m
C: No breakage occurred when rewinding at a speed of 5 m/min and a transport tension of 70 N/m, but breakage occurred when the speed was changed to 8 m/min at a transport tension of 70 N/m
D: No breakage occurred when rewinding at a speed of 5 m/min and a transport tension of 50 N/m, but breakage occurred when the speed was changed to 5 m/min at a transport tension of 70 N/m
E: Breakage occurred when rewinding at a speed of 5 m/min and a transport tension of 50 N/m

The film processability rated as A, B, C, or D is preferred.

(16) Water vapor barrier property after Al vapor deposition

<Al vapor deposition method>

The film was set in a vacuum vapor deposition apparatus equipped with a film running device, and after a high vacuum state of $1.00 \times 10^{-2}$ Pa, the film was run on a cooling metal drum at 20°C while aluminum metal was thermally evaporated to form a vapor deposited thin film layer on the film. In this case, the thickness of the vapor deposited film was controlled to be 100 nm. After vapor deposition, the inside of the vacuum vapor deposition apparatus was returned to atmospheric pressure, the rolled film was rewound, and aged at a temperature of 40°C for 2 days to obtain a laminate with Al (aluminum) vapor deposition layer laminated on the film.

<Method of evaluating water vapor barrier property>

For the Al-deposited laminate, measurements were performed using the water vapor transmission rate measuring device "PERMATRAN-W" (registered trademark) 3/30 manufactured by MOCON/Modern Controls Inc. under conditions at a temperature of 40°C and a humidity of 90% RH. The measurement was carried out five times for each sample, and the average value was calculated and designated as the water vapor transmission rate for that film (unit: g/$m^2$/day). From the resulting water vapor transmission rate, the water vapor barrier property of the laminate was determined according to the following criteria.

A: 20 g/$m^2$/day or less
B: more than 20 g/$m^2$/day and 50 g/$m^2$/day or less
C: more than 50 g/$m^2$/day and 75 g/$m^2$/day or less
D: more than 75 g/$m^2$/day and 100 g/$m^2$/day or less
E: more than 100 g/$m^2$/day

The barrier property of the film rated as A, B, C, or D is preferred.

(17) Pinhole after flex test

In accordance with ASTM F-392, the film was cut into a size of $297 \times 210$ mm and subjected to 500 repetitions of the flex test using a Gelbo tester with thermostatic chamber manufactured by TESTER SANGYO CO,.LTD., in a temperature atmosphere at 10°C. Thereafter, the average number of pinholes was calculated for 10 samples. The content retention ability was evaluated according to the following criteria. The 10 samples cut as test samples were cut out randomly without specifying the main orientation axis direction and the direction orthogonal to the main orientation axis direction.

A: Zero or less than three pinholes occurred.
B: 3 or more and less than 5 pinholes occurred.
C: 5 or more and less than 7 pinholes occurred.
D: 7 or more and less than 10 pinholes occurred.
E: 10 or more pinholes occurred.

The content protection ability of the film rated as A, B, C, or D is preferred.

[Resin and the like]

The following resins and the like were used to produce the polyhydroxyalkanoic acid films in each of the Examples and Comparative Examples.

(Polyhydroxyalkanoate resin)

A1: PHBH resin (poly(3-hydroxybutyrate-co-3-hydroxyhexanoate); crystal nucleating agent, pentaerythritol 1.0% by mass; weight average molecular weight Mw, 500,000; melting point, 153 °C)

A2: PHBH resin (poly(3-hydroxybutyrate-co-3-hydroxyhexanoate); crystal nucleating agent, pentaerythritol 1.0% by mass; weight average molecular weight Mw, 600,000; melting point, 146°C)

A3: PHBH resin (poly(3-hydroxybutyrate-co-3-hydroxyhexanoate); crystal nucleating agent, behenic acid amide 1.0% by mass; weight average molecular weight Mw, 500,000; melting point, 153 °C)

A4: PHBH resin (poly(3-hydroxybutyrate-co-3-hydroxyhexanoate); crystal nucleating agent, talc 1.0% by mass; weight average molecular weight Mw, 500,000; melting point, 153 °C)

A5: PHBH resin containing no crystal nucleating agent (poly(3-hydroxybutyrate-co-3-hydroxyhexanoate); weight average molecular weight Mw, 500,000; melting point, 153 °C)

A6: PHBV resin (poly(3-hydroxybutyrate-co-3-hydroxyvalerate); crystal nucleating agent, pentaerythritol 1.0% by mass; weight average molecular weight Mw, 450,000; melting point, 170°C)

(Example 1)

A polyhydroxyalkanoate resin raw material (A1) was fed to a single screw melt extruder. Here, the oxygen concentration in the extruder feed hopper was controlled to 0.05% by volume, and after melt extrusion at a temperature of 170°C in each extruder, foreign matter was removed from the extruded molten resin with a 250 $\mu$m-cut mesh filter. The molten sheet was then guided to the T-die and discharged into a sheet form. The discharged molten sheet was cooled and solidified on a casting drum maintained at 30°C to obtain an unstretched sheet.

Next, the unstretched sheet was led to the MD stretching step at a film formation speed draw ratio of 108% in the section between the casting drum and the longitudinal direction (MD) stretching step, and the sheet was kept at preheating temperature of 30°C for 100 seconds in a plurality of roll groups in the MD stretching step, then the temperature was kept at 152°C for 1 second, then the sheet was passed between rolls kept at 152°C with a peripheral speed difference, and then the sheet was stretched 3.5 times in the longitudinal direction. Subsequently, the stretched film was passed between rolls kept at 30°C, and cooled to room temperature to obtain uniaxially oriented film. Furthermore, the resulting uniaxially oriented film was guided to the tenter, preheated to 100°C with both ends in the width direction gripped by the clips, stretched 2.4 times at 100°C in the width direction, and then heat-treated at 120°C for 15 seconds while giving 5% relaxation at a rate of 40%/min at 120°C in the width direction. Thereafter, while the clips continued to tensely grip both ends in the width direction, the film was guided to the outside of the tenter through a cooling step at 50°C, the clips at both ends in the width direction was released, one surface was subjected to corona treatment, and then a polyhydroxyalkanoic acid film with a thickness of 20 $\mu$m was wound up into a roll on a winding machine.

Subsequently, the polyhydroxyalkanoic acid film was unwound from the roll, and the corona discharge-treated surface was subjected to Al vapor deposition by the method described above to obtain a laminate having Al vapor deposition layer (layer D).

(Examples 2 to 6 and 10 to 15)

A polyhydroxyalkanoic acid film and a laminate were prepared in the same manner as in Example 1, except that the production conditions were changed to the conditions shown in the table.

(Example 7)

A polyhydroxyalkanoic acid film and a laminate were prepared in the same manner as in Example 1, except that A2 was used as the polyhydroxyalkanoate resin and the film formation conditions were changed to the conditions shown in the table.

(Example 8)

A polyhydroxyalkanoic acid film and a laminate were prepared in the same manner as in Example 1, except that A3 was used as the polyhydroxyalkanoate resin and the film formation conditions were changed to the conditions shown in the table.

(Example 9)

A polyhydroxyalkanoic acid film and a laminate were prepared in the same manner as in Example 1, except that A6 was used as the polyhydroxyalkanoate resin, the extruder temperature was changed to 190°C and the film formation conditions were changed to the conditions shown in the table.

(Comparative Example 1)

The polyhydroxyalkanoate resin raw material (A1) was fed to a single screw melt extruder and melt-extruded at 170°C, and then foreign matter was removed from the extruded molten resin with a 250 $\mu$m-cut mesh filter. Thereafter, the film was molded at a molding temperature of 150°C and a blow ratio of 2.5 in an inflation molding machine having a round die with a diameter of 60 mm, and after corona treatment, a 20 $\mu$m-thick polyhydroxyalkanoic acid film subjected to the inflation method was wound as a roll on a winding machine. Subsequently, the polyhydroxyalkanoic acid film was unwound from the roll, and the corona discharge-treated surface was subjected to Al vapor deposition by the method described above to obtain a laminate having Al vapor deposition layer (layer D).

(Comparative Example 2)

An unstretched polyhydroxyalkanoic acid film with a thickness of 60 $\mu$m and a laminate were prepared in the same manner as in Example 1, except that biaxial stretching and heat treatment were not applied.

(Comparative Example 3)

A polyhydroxyalkanoic acid film with a thickness of 40 $\mu$m and a laminate were prepared in the same manner as in Example 1, except that the oxygen concentration in the extruder feed hopper was controlled to 0.15% by volume, and the longitudinal stretching ratio and transverse stretching ratio and the heat treatment temperature were changed to the conditions shown in the table.

(Comparative Example 4)

A polyhydroxyalkanoic acid film and a laminate were prepared in the same manner as in Example 1, except that A4 was used as the polyhydroxyalkanoate resin and the film formation conditions were changed to the conditions shown in the table.

(Comparative Example 5)

An attempt was made to obtain a polyhydroxyalkanoic acid film in the same manner as in Example 1, except that A5 containing no nucleating agent was used as the polyhydroxyalkanoate resin and the film formation conditions were changed to those shown in the table. However, breakage occurred during the stretching step and a film could not be obtained.

(Comparative Example 6)

A polyhydroxyalkanoic acid film with a thickness of 25 $\mu$m and a laminate were prepared in the same manner as in Example 1, except that the stretching direction was MD only and the film formation conditions were changed to the conditions shown in the table.

(Comparative Example 7)

A polyhydroxyalkanoic acid film and a laminate were produced in the same manner as in Example 1, except that the film conveying speed at the inlet of the longitudinal stretching relative to that at the casting outlet was controlled to 100% and other film formation conditions were changed to the conditions shown in the table.

[Table 1]

[Table 1]

| | | | Example 1 | Example 2 | Example 3 | Example 4 | Example 5 |
|---|---|---|---|---|---|---|---|
| Film for-mation conditions | Nucleating agent | Type | Pentaerythritol | Pentaerythritol | Pentaerythritol | Pentaerythritol | Pentaerythritol |
| | Ratio of film conveying speed at cast outlet to film conveying speed at longitudinal stretching inlet | % | 108 | 101 | 118 | 108 | 108 |
| | Longitudinal stretching ratio | Times | 3.5 | 3.5 | 3.5 | 1.8 | 4.2 |
| | Transverse stretching ratio | Times | 2.4 | 2.4 | 2.4 | 2.3 | 5 |
| | Area magnification | Times | 8.4 | 8.4 | 8.4 | 4.14 | 21 |
| | Heat treatment temperature | °C | 120 | 120 | 120 | 120 | 120 |
| | Relaxation treatment rate | %/min | 40 | 40 | 40 | 40 | 40 |
| | Heat treatment time | second | 15 | 15 | 15 | 15 | 15 |

[Table 2]

[Table 2]

|  |  |  | Example 1 | Example 2 | Example 3 | Example 4 | Example 5 |
|---|---|---|---|---|---|---|---|
| Physical properties | Film thickness | μm | 20 | 20 | 20 | 20 | 20 |
|  | Puncture strength | gf/20μm | 271 | 245 | 811 | 242 | 920 |
|  | Puncture displacement | mm | 3.3 | 3.6 | 2.4 | 3.5 | 2.1 |
|  | Tensile strength at break in main orientation axis direction S1 | MPa | 50 | 30 | 65 | 33 | 80 |
|  | Tensile strength at break in direction orthogonal to main orientation axis direction S2 | MPa | 43 | 30 | 55 | 41 | 90 |
|  | Shrinkage onset temperature in main orientation axis direction T1 | °C | 80 | 90 | 45 | 90 | 45 |
|  | Shrinkage onset temperature in direction orthogonal to main orientation axis direction T2 | °C | 60 | 70 | 40 | 70 | 40 |
|  | Refractive index in main orientation axis direction N1 | - | 1.4738 | 1.4735 | 1.4745 | 1.4670 | 1.4742 |
|  | Refractive index in direction orthogonal to main orientation axis direction N2 | - | 1.4726 | 1.4727 | 1.4722 | 1.4731 | 1.4707 |
|  | \|N1-N2\| | - | 0.0012 | 0.0008 | 0.0023 | 0.0061 | 0.0035 |
|  | Thermal shrinkage ratio in main orientation axis direction H1 | % | 5.8 | 5.2 | 8.5 | 5.1 | 8.6 |
|  | Thermal shrinkage ratio in direction orthogonal to main orientation axis direction H2 | % | 4.2 | 3.1 | 15.5 | 3.3 | 15.1 |
|  | Nz | - | 1.4680 | 1.4680 | 1.4680 | 1.4680 | 1.4680 |
|  | N12-Nz | - | 0.0052 | 0.0051 | 0.0053 | 0.0021 | 0.0044 |
|  | Elongation at break in main orientation axis direction L1 | % | 290 | 310 | 250 | 315 | 190 |
|  | Elongation at break in direction orthogonal to main orientation axis direction L2 | % | 190 | 210 | 160 | 215 | 80 |
|  | Crystallite size | nm | 13 | 32 | 10 | 42 | 7 |

(continued)

|  |  |  | Example 1 | Example 2 | Example 3 | Example 4 | Example 5 |
|---|---|---|---|---|---|---|---|
|  | Melting point of film | °C | 150 | 150 | 150 | 150 | 151 |

[Table 3]

[Table 3]

|  |  |  | Example 1 | Example 2 | Example 3 | Example 4 | Example 5 |
|---|---|---|---|---|---|---|---|
| Effect | Biodegradability | - | A | C | B | A | C |
|  | Breakage occurring upon change in conveying speed/tension | - | A | C | A | B | B |
|  | Water vapor barrier property after Al vapor deposition | - | A | B | C | B | C |
|  | Pinhole after bending test | - | A | B | B | C | D |

[Table 4]

[Table 4]

| | | | Example 6 | Example 7 | Example 8 | Example 9 | Example 10 |
|---|---|---|---|---|---|---|---|
| | Nucleating agent | Type | Pentaerythritol | Pentaerythritol | Behenamide | Pentaerythritol | Pentaerythritol |
| | Ratio of film conveying speed at cast outlet to film conveying speed at longitudinal stretching inlet | % | 108 | 108 | 101 | 108 | 101 |
| Film formation conditions | Longitudinal stretching ratio | Times | 3.5 | 4 | 2.5 | 2.5 | 2.4 |
| | Transverse stretching ratio | Times | 2.4 | 2.1 | 2.5 | 2.5 | 2.1 |
| | Area magnification | Times | 8.4 | 8.4 | 6.25 | 6.25 | 5.04 |
| | Heat treatment temperature | °C | 55 | 120 | 55 | 120 | 120 |
| | Relaxation treatment rate | %/min | 40 | 40 | 40 | 40 | 40 |
| | Heat treatment time | second | 15 | 15 | 15 | 15 | 15 |

[Table 5]

[Table 5]

| | | | Example 6 | Example 7 | Example 8 | Example 9 | Example 10 |
|---|---|---|---|---|---|---|---|
| Physical properties | Film thickness | μm | 20 | 20 | 20 | 20 | 20 |
| | Puncture strength | gf/20μm | 100 | 651 | 100 | 985 | 145 |
| | Puncture displacement | mm | 3.5 | 2.4 | 3.5 | 2.0 | 3.5 |
| | Tensile strength at break in main orientation axis direction S1 | MPa | 38 | 90 | 31 | 80 | 32 |
| | Tensile strength at break in direction orthogonal to main orientation axis direction S2 | MPa | 33 | 200 | 31 | 85 | 31 |
| | Shrinkage onset temperature in main orientation axis direction T1 | °C | 40 | 115 | 35 | 90 | 120 |
| | Shrinkage onset temperature in direction orthogonal to main orientation axis direction T2 | °C | 35 | 50 | 35 | 85 | 50 |
| | Refractive index in main orientation axis direction N1 | - | 1.4739 | 1.4707 | 1.4736 | 1.4738 | 1.4731 |
| | Refractive index in direction orthogonal to main orientation axis direction N2 | - | 1.4725 | 1.4742 | 1.4732 | 1.4726 | 1.4730 |
| | \|N1-N2\| | - | 0.0014 | 0.0035 | 0.0004 | 0.0012 | 0.0001 |
| | Thermal shrinkage ratio in main orientation axis direction H1 | % | 14.8 | 4.6 | 22.8 | 5.2 | 4.1 |
| | Thermal shrinkage ratio in direction orthogonal to main orientation axis direction H2 | % | 21.1 | 13.8 | 22.5 | 3.3 | 12.1 |
| | Nz | - | 1.4680 | 1.4633 | 1.4690 | 1.4680 | 1.4640 |
| | N12-Nz | - | 0.0052 | 0.0091 | 0.0044 | 0.0052 | 0.0091 |
| | Elongation at break in main orientation axis direction L1 | % | 335 | 130 | 85 | 18 | 330 |
| | Elongation at break in direction orthogonal to main orientation axis direction L2 | % | 345 | 60 | 80 | 19 | 335 |
| | Crystallite size | nm | 7 | 21 | 6 | 10 | 35 |

(continued)

|  |  |  | Example 6 | Example 7 | Example 8 | Example 9 | Example 10 |
|---|---|---|---|---|---|---|---|
|  | Melting point of film | °C | 149 | 143 | 150 | 169 | 150 |

[Table 6]

[Table 6]

|  |  |  | Example 6 | Example 7 | Example 8 | Example 9 | Example 10 |
|---|---|---|---|---|---|---|---|
| Effect | Biodegradability | - | C | A | D | B | C |
|  | Breakage occurring upon change in conveying speed/tension | - | B | B | C | D | C |
|  | Water vapor barrier property after Al vapor deposition | - | D | B | D | A | B |
|  | Pinhole after bending test | - | D | C | D | D | D |

[Table 7]

[Table 7]

| | | | Example 11 | Example 12 | Example 13 | Example 14 | Example 15 | Comparative Example 1 | Comparative Example 2 |
|---|---|---|---|---|---|---|---|---|---|
| Film formation conditions | Nucleating agent | Type | Pentaerythritol | Pentaerythritol | Pentaerythritol | Pentaerythritol | Pentaerythritol | Pentaerythritol | Pentaerythritol |
| | Ratio of film conveying speed at cast outlet to film conveying speed at longitudinal stretching inlet | % | 125 | 108 | 108 | 108 | 108 | - | - |
| | Longitudinal stretching ratio | Times | 3.8 | 3.5 | 3.5 | 1.8 | 1.8 | Inflation method Blow rate 2.5 | - |
| | Transverse stretching ratio | Times | 1.6 | 2.4 | 2.4 | 2.3 | 2.3 | | - |
| | Area magnification | Times | 6.08 | 8.4 | 8.4 | 4.14 | 4.14 | | - |
| | Heat treatment temperature | °C | 120 | 143 | 150 | 120 | 120 | 50 | - |
| | Relaxation treatment rate | %/min | 40 | 40 | 40 | 40 | 40 | - | - |
| | Heat treatment time | second | 15 | 15 | 15 | 15 | 15 | 15 | - |

29

[Table 8]

[Table 8]

[Table 8]

| | | | Example 11 | Example 12 | Example 13 | Example 14 | Example 15 | Comparative Example 1 | Comparative Example 2 |
|---|---|---|---|---|---|---|---|---|---|
| Physical properties | Film thickness | μm | 20 | 20 | 20 | 8 | 55 | 20 | 60 |
| | Puncture strength | gf/20μm | 215 | 815 | 1030 | 242 | 242 | 77 | 75 |
| | Puncture displacement | mm | 3.3 | 2.5 | 2.0 | 3.5 | 3.5 | 3.4 | 1.5 |
| | Tensile strength at break in main orientation axis direction S1 | MPa | 95 | 38 | 34 | 33 | 65 | 26 | 13 |
| | Tensile strength at break in direction orthogonal to main orientation axis direction S2 | MPa | 35 | 36 | 31 | 32 | 55 | 24 | 15 |
| | Shrinkage onset temperature in main orientation axis direction T1 | °C | 40 | 141 | 146 | 90 | 90 | Expansion | Expansion |
| | Shrinkage onset temperature in direction orthogonal to main orientation axis direction T2 | °C | 145 | 144 | 149 | 70 | 70 | Expansion | Expansion |
| | Refractive index in main orientation axis direction N1 | - | 1.4785 | 1.4738 | 1.4738 | 1.4670 | 1.4670 | 1.4680 | 1.4657 |
| | Refractive index in direction orthogonal to main orientation axis direction N2 | - | 1.4705 | 1.4726 | 1.4726 | 1.4731 | 1.4731 | 1.4672 | 1.4660 |
| | $|N1-N2|$ | - | 0.0080 | 0.0012 | 0.0012 | 0.0061 | 0.0061 | 0.0008 | 0.0003 |
| | Thermal shrinkage ratio in main orientation axis direction H1 | % | 14.4 | 4.2 | 1.5 | 5.1 | 5.1 | Expansion | Expansion |
| | Thermal shrinkage ratio in direction orthogonal to main orientation axis direction H2 | % | 0.2 | 0.2 | 0.1 | 3.3 | 3.3 | Expansion | Expansion |
| | Nz | - | 1.4620 | 1.4680 | 1.4680 | 1.4680 | 1.4680 | 1.4590 | 1.4661 |
| | N12-Nz | - | 0.0125 | 0.0052 | 0.0052 | 0.0021 | 0.0021 | 0.0086 | -0.0002 |
| | Elongation at break in main orientation axis direction L1 | % | 220 | 81 | 17 | 310 | 285 | 621 | 77 |
| | Elongation at break in direction orthogonal to main orientation axis direction L2 | % | 345 | 84 | 19 | 215 | 200 | 577 | 95 |
| | Crystallite size | nm | 15 | 42 | 55 | 42 | 42 | - | - |

31

| | | | Example 11 | Example 12 | Example 13 | Example 14 | Example 15 | Comparative Example 1 | Comparative Example 2 |
|---|---|---|---|---|---|---|---|---|---|
| | Melting point of film | °C | 150 | 150 | 150 | 150 | 150 | 150 | 149 |

[Table 9]

[Table 9]

| | | | Example 11 | Example 12 | Example 13 | Example 14 | Example 15 | Comparative Example 1 | Comparative Example 2 |
|---|---|---|---|---|---|---|---|---|---|
| Effect | Biodegradability | - | B | C | D | A | B | E | C |
| | Breakage occurring upon change in conveying speed/tension | - | A | C | D | C | A | E | E |
| | Water vapor barrier property after Al vapor deposition | - | C | C | D | B | B | E | E |
| | Pinhole after bending test | - | A | C | D | C | C | E | E |

[Table 10]

[Table 10]

| Film formation conditions | | | Comparative Example 3 | Comparative Example 4 | Comparative Example 5 | Comparative Example 6 | Comparative Example 7 |
|---|---|---|---|---|---|---|---|
| | Nucleating agent | Type | Pentaerythritol | Talc | Absent | Pentaerythritol | Pentaerythritol |
| | Ratio of film conveying speed at cast outlet to film conveying speed at longitudinal stretching inlet | % | 108 | 108 | 108 | 108 | 100 |
| | Longitudinal stretching ratio | Times | 1.5 | 3.5 | 3.5 | 4 | 2.1 |
| | Transverse stretching ratio | Times | 1.5 | 2.4 | 2.4 | - | 2.0 |
| | Area magnification | Times | 2.25 | 8.4 | 8.4 | 4 | 4.2 |
| | Heat treatment temperature | °C | 50 | 120 | 120 | 120 | 50 |
| | Relaxation treatment rate | %/min | 40 | 40 | 40 | - | 40 |
| | Heat treatment time | second | 15 | 15 | 15 | 15 | 15 |

EP 4 678 686 A1

[Table 11]

[Table 11]

| | | | Comparative Example 3 | Comparative Example 4 | Comparative Example 5 | Comparative Example 6 | Comparative Example 7 |
|---|---|---|---|---|---|---|---|
| Physical properties | Film thickness | μm | 40 | 20 | 20 | 25 | 20 |
| | Puncture strength | gf/20μm | 65 | 68 | - | 70 | 78 |
| | Puncture displacement | mm | 3.5 | 3.6 | - | 3.5 | 3.5 |
| | Tensile strength at break in main orientation axis direction S1 | MPa | 25 | 38 | - | 90 | 28 |
| | Tensile strength at break in direction orthogonal to main orientation axis direction S2 | MPa | 25 | 28 | - | 15 | 29 |
| | Shrinkage onset temperature in main orientation axis direction T1 | °C | 150 | 35 | - | 35 | 150 |
| | Shrinkage onset temperature in direction orthogonal to main orientation axis direction T2 | °C | 150 | 40 | - | Expansion | 150 |
| | Refractive index in main orientation axis direction N1 | - | 1.4690 | 1.4730 | - | 1.4665 | 1.4690 |
| | Refractive index in direction orthogonal to main orientation axis direction N2 | - | 1.4690 | 1.4725 | - | 1.4654 | 1.4688 |
| | |N1-N2| | - | 0.0000 | 0.0005 | - | 0.0011 | 0.0002 |

(continued)

|  |  |  | Comparative Example 3 | Comparative Example 4 | Comparative Example 5 | Comparative Example 6 | Comparative Example 7 |
|---|---|---|---|---|---|---|---|
| | Thermal shrinkage ratio in main orientation axis direction H1 | % | 0.1 | 22.2 | - | 23.3 | 0.1 |
| | Thermal shrinkage ratio in direction orthogonal to main orientation axis direction H2 | % | 0.1 | 16.5 | - | Expansion | 0.1 |
| | Nz | - | 1.4670 | 1.4680 | - | 1.4620 | 1.4670 |
| | N12-Nz | - | 0.0020 | 0.0048 | - | 0.0039 | 0.0061 |
| | Elongation at break in main orientation axis direction L1 | % | 360 | 305 | - | 206 | 420 |
| | Elongation at break in direction orthogonal to main orientation axis direction L2 | % | 360 | 195 | - | 653 | 410 |
| | Crystallite size | nm | 65 | 85 | - | - | - |
| | Melting point of film | °C | 150 | 150 | - | 150 | 149 |

[Table 12]

[Table 12]

|  |  |  | | Comparative Example 3 | Comparative Example 4 | Comparative Example 5 | Comparative Example 6 | Comparative Example 7 |
|---|---|---|---|---|---|---|---|---|
| Effect | | Biodegradability | - | E | B | - | E | E |
| | | Breakage occurring upon change in conveying speed/tension | - | B | E | - | E | B |
| | | Water vapor barrier property after Al vapor deposition | - | D | E | - | E | D |
| | | Pinhole after bending test | - | E | E | - | E | E |

Industrial Applicability

The present invention can provide a polyhydroxyalkanoic acid film that has excellent biodegradability and excellent puncture strength. The polyhydroxyalkanoic acid film of the present invention has the above described characteristics and is excellent in biodegradability, content protection function, and barrier property, and therefore can be suitably used for packaging and agriculture, forestry, and fisheries applications.

Reference Signs List

1: Diffraction image
2: X-ray source
3: Sample
4. Thickness direction
5. Main orientation axis direction
6: Scanning range
7: Diffraction angle $2\theta$
8: Direction orthogonal to main orientation axis direction
9: Elevation angle

**Claims**

1. A polyhydroxyalkanoic acid film having a puncture strength (converted value at a thickness of 20 $\mu$m) of 80gf or more, measured using the following measuring device and under the following measuring conditions:

    Measuring device: HANDY-TYPE COMPRESSION TESTER KES-G5
    manufactured by KATO TECH CO.,LTD.
    (Measurement Conditions)
    SENS:10
    SPEED:0.20 cm/sec
    STROKE: 20 mm/10 V
    Needle diameter: 1.0 mm$\varphi$
    Hole diameter:10.0 mm$\varphi$

2. The polyhydroxyalkanoic acid film according to claim 1, wherein S1 and S2 satisfy the following formula (1) and formula (2):

$$30 \text{ MPa} \leq S1 \leq 280 \text{ MPa} \cdots \text{formula (1)}$$

$$30 \text{ MPa} \leq S2 \leq 280 \text{ MPa} \cdots \text{formula (2)}$$

where S1 (MPa) is a tensile strength at break in a main orientation axis direction, and S2 (MPa) is a tensile strength at break in a direction orthogonal to the main orientation axis direction.

3. The polyhydroxyalkanoic acid film according to claim 1 or 2, wherein in a thermal shrinkage curve obtained with a thermomechanical analyzer (TMA), both of a shrinkage onset temperature T1 (°C) in the main orientation axis direction of the film and a shrinkage onset temperature T2 (°C) in the direction orthogonal to the main orientation axis direction are 40°C or more and 150°C or less.

4. The polyhydroxyalkanoic acid film according to claim 1 or 2, wherein N1 and N2 satisfy the following formula (3):

$$2.0 \times 10^{-4} \leq |N1 - N2| \leq 1.3 \times 10^{-2} \cdots \text{formula (3)}$$

where N1 is a refractive index at a wavelength of 1550 nm in the main orientation axis direction and N2 is a refractive index at a wavelength of 1550 nm in the direction orthogonal to the main orientation axis direction.

5. The polyhydroxyalkanoic acid film according to claim 1 or 2, wherein both of a thermal shrinkage ratio H1 (%) in the main orientation axis direction of the film and a thermal shrinkage ratio H2 (%) in a direction orthogonal to the main orientation axis direction of the film obtained by heat treatment at 120°C for 15 minutes, are 0% or more and 20% or less.

6. The polyhydroxyalkanoic acid film according to claim 1 or 2, wherein both of L1 and L2 are 10% or more and 350% or less, where L1 (%) is an elongation at break in the main orientation axis direction and L2 (%) is an elongation at break in the direction orthogonal to the main orientation axis direction.

7. The polyhydroxyalkanoic acid film according to claim 1 or 2, wherein a puncture displacement is 2.0 mm or more and 4.5 mm or less as measured using the following measuring device and measurement conditions:

Measuring device: HANDY-TYPE COMPRESSION TESTER KES-G5 manufactured by KATO TECH CO.,LTD.
(Measurement condition)
SENS:10
SPEED: 0.20 cm/sec
STROKE:20mm/10V
Needle diameter :1.0mmφ
Hole diameter :10.0mmφ

8. The polyhydroxyalkanoic acid film according to claim 1 or 2, satisfying the following formula (4):

$$0.002 \leq (N12 - Nz) \leq 0.015 \cdots \text{formula (4)}$$

where N1 is a refractive index at a wavelength of 1550 nm in the main orientation axis direction, N2 is a refractive index at a wavelength of 1550 nm in the direction orthogonal to the main orientation axis direction, Nz is a refractive index at a wavelength of 1550 nm in the thickness direction, and N12 is an average value of N1 and N2.

9. The polyhydroxyalkanoic acid film according to claim 1 or 2, wherein in wide-angle X-ray diffraction in the thickness direction using a CuKα radiation, the crystallite size obtained from a half width of PB is 5 nm or more and 60 nm or less, where PB is the peak with the highest intensity among the peaks with a degree of orientation of 0.50 or more at a diffraction angle 2θ in the range of 19° or more and 21° or less.

10. The polyhydroxyalkanoic acid film according to claim 1 or 2, further comprising a functional layer on at least one side.

11. The polyhydroxyalkanoic acid film according to claim 1 or 2, which is used for packaging application.

12. A packaging body, comprising the polyhydroxyalkanoic acid film according to claim 1 or 2.

13. The polyhydroxyalkanoic acid film according to claim 1 or 2, which is used for agricultural, forestry and fishery application.

14. Agricultural, forestry and fishery materials, comprising the polyhydroxyalkanoic acid film according to claim 1 or 2.

15. A biodegradation method, comprising decomposing the polyhydroxyalkanoic acid film according to claim 1 or 2 with a compost equipment.

16. A biodegradation method, comprising decomposing the packaging body according to claim 12 with a compost equipment.

17. A biodegradation method, comprising decomposing the agricultural, forestry and fishery materials according to claim 14 with a compost equipment.

18. The polyhydroxyalkanoic acid film according to claim 1 or 2, which is a film used to cover agricultural, forestry and fishery contents, the agricultural, forestry and fishery contents including at least one selected from fertilizers, feeds, seeds and seedlings, and chemicals.

19. Agricultural, forestry and fishery contents, which is covered with the polyhydroxyalkanoic acid film according to claim 1 or 2.

Fig. 1

Fig. 2

Fig. 3

## INTERNATIONAL SEARCH REPORT

International application No.

**PCT/JP2024/006950**

### A. CLASSIFICATION OF SUBJECT MATTER

*C08J 5/18*(2006.01)i; *A01G 9/14*(2006.01)i; *A01G 13/00*(2006.01)i; *A01G 13/02*(2006.01)i; *B32B 27/18*(2006.01)i; *B32B 27/36*(2006.01)i; *B65D 65/40*(2006.01)i; *C08L 101/16*(2006.01)i

FI:  C08J5/18 CFD; B32B27/36; B65D65/40 D; A01G13/00 302Z; B32B27/18 Z; A01G13/02 D; A01G9/14 S; C08L101/16 ZBP

According to International Patent Classification (IPC) or to both national classification and IPC

### B. FIELDS SEARCHED

Minimum documentation searched (classification system followed by classification symbols)

C08J5/18; A01G9/14; A01G13/00; A01G13/02; B32B27/18; B32B27/36; B65D65/40; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/173465 A1 (NEWLIGHT TECHNOLOGIES, INC.) 18 August 2022 (2022-08-18) claims, paragraphs [0062]-[0066], [0084]-[0086], examples | 1-8 |
| A | | 9 |
| X | JP 2022-37396 A (KANEKA CORP.) 09 March 2022 (2022-03-09) claims, paragraphs [0038], [0053]-[0056], [0074]-[0075], examples | 1, 4, 7-8, 10-19 |
| Y | | 1-8, 10-19 |
| A | | 9 |
| Y | JP 2004-224870 A (MITSUI CHEMICALS, INC.) 12 August 2004 (2004-08-12) | 1-8, 10-19 |
| A | | 9 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## EP 4 678 686 A1

**INTERNATIONAL SEARCH REPORT**

| International application No. |
|---|
| **PCT/JP2024/006950** |

### C. DOCUMENTS CONSIDERED TO BE RELEVANT

| Category* | Citation of document, with indication, where appropriate, of the relevant passages | Relevant to claim No. |
|---|---|---|
| Y | JP 10-176070 A (RIKEN) 30 June 1998 (1998-06-30)<br>claims, paragraphs [0028]-[0035], examples | 2,6 |
| A | | 9 |
| Y | JP 4294475 B2 (TOYO SEIKAN KAISHA LTD.) 15 July 2009 (2009-07-15)<br>claims, examples | 3,5 |
| A | | 9 |
| A | JP 2000-289104 A (GUNZE LIMITED) 17 October 2000 (2000-10-17)<br>entire text | 1-19 |
| A | JP 2022-62759 A (KANEKA CORP.) 21 April 2022 (2022-04-21)<br>entire text | 1-19 |
| P, X | JP 2023-73820 A (KANEKA CORP.) 26 May 2023 (2023-05-26)<br>claims, paragraphs [0050], [0070]-[0104], examples | 1-8, 10-19 |

Form PCT/ISA/210 (second sheet) (July 2022)

43

**INTERNATIONAL SEARCH REPORT**
Information on patent family members

| International application No. |
| --- |
| **PCT/JP2024/006950** |

| Patent document cited in search report | | | Publication date (day/month/year) | Patent family member(s) | Publication date (day/month/year) |
| --- | --- | --- | --- | --- | --- |
| WO | 2022/173465 | A1 | 18 August 2022 | (Family: none) | |
| JP | 2022-37396 | A | 09 March 2022 | (Family: none) | |
| JP | 2004-224870 | A | 12 August 2004 | (Family: none) | |
| JP | 10-176070 | A | 30 June 1998 | US 5917002 A claims, column 6, lines 18-37, examples | |
| JP | 4294475 | B2 | 15 July 2009 | (Family: none) | |
| JP | 2000-289104 | A | 17 October 2000 | (Family: none) | |
| JP | 2022-62759 | A | 21 April 2022 | (Family: none) | |
| JP | 2023-73820 | A | 26 May 2023 | (Family: none) | |

Form PCT/ISA/210 (patent family annex) (July 2022)

**REFERENCES CITED IN THE DESCRIPTION**

**Patent documents cited in the description**

- JP 2022106249 A
- JP 2003311825 A
- JP 2022062759 A